# EUROPEAN PATENT SPECIFICATION

(11) **EP 4 096 164 B1**
(45) Date of publication and mention of the grant of the patent: **01.01.2025**
(21) Application number: 21176758.7
(22) Date of filing: 28.05.2021
(51) Int. Cl.: H04L 41/5061, H04L 41/02, H04L 41/0853

(54) **METHOD FOR OPERATING A BROADBAND ACCESS NETWORK OF A TELECOMMUNICATIONS NETWORK, THE BROADBAND ACCESS NETWORK COMPRISING AT LEAST ONE CENTRAL OFFICE POINT OF DELIVERY, BROADBAND ACCESS NETWORK OR TELECOMMUNICATIONS NETWORK, SYSTEM, ATTRIBUTE CATALOG ENTITY OR FUNCTIONALITY, PROGRAM AND COMPUTER-READABLE MEDIUM**
VERFAHREN ZUM BETRIEB EINES BREITBANDZUGANGSNETZWERKS EINES TELEKOMMUNIKATIONSNETZWERKS, DAS BREITBANDZUGANGSNETZWERK MIT MINDESTENS EINEM CENTRAL OFFICE POINT OF DELIVERY, BREITBANDZUGANGSNETZWERK ODER TELEKOMMUNIKATIONSNETZWERK, SYSTEM, ATTRIBUTKATALOGEINHEIT ODER -FUNKTIONALITÄT, PROGRAMM UND COMPUTERLESBARES MEDIUM
PROCÉDÉ DE FONCTIONNEMENT D'UN RÉSEAU D'ACCÈS À LARGE BANDE D'UN RÉSEAU DE TÉLÉCOMMUNICATIONS, RÉSEAU D'ACCÈS À LARGE BANDE COMPRENANT AU MOINS UN POINT DE LIVRAISON DE CENTRAL TÉLÉPHONIQUE, RÉSEAU D'ACCÈS À LARGE BANDE OU RÉSEAU DE TÉLÉCOMMUNICATIONS, SYSTÈME, ENTITÉ OU FONCTIONNALITÉ DE CATALOGUE D'ATTRIBUTS, PROGRAMME ET SUPPORT LISIBLE PAR ORDINATEUR

(43) Date of publication of application: 30.11.2022
(73) Proprietor: Deutsche Telekom AG, 53113 Bonn (DE)
(72) Inventor: HAAG, Thomas, 63110 Rodgau (DE); TERLINDE, Egbert, 64291 Darmstadt (DE)
(74) Representative: Schwöbel, Thilo K.

(56) References cited:
- EP-A1- 3 136 759
- WO-A2-2015/026785
- US-A1- 2003 153 302

## Description

### BACKGROUND

The present invention relates to a method for operating a broadband access network of a telecommunications network, the broadband access network comprising at least one central office point of delivery and the central office point of delivery comprising an access orchestrator entity or functionality, at least one element management system entity or functionality, a plurality of access nodes serving or being related to one or a plurality of end users or subscribers of the telecommunications network, wherein the telecommunications network also comprises a business and/or operations support system as defined in claim 1 and corresponding broadband access network or telecommunications network according to claim 8, program comprising a computer readable program code according to claim 10 and computer-readable medium comprising instructions according to claim 11.

Preferred embodiments are defined in the dependent claims.

The exchange of packetized information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

In conventionally known or current telecommunications network or central office point of delivery design architectures, there might be a self-service application or portal that is able to communicate with a business and/or operations support system of the telecommunications network or with applications thereof (i.e. of the business and/or operations support system) such that customers or subscribers of the telecommunications network are able to attempt to apply changes to the subscribed services requested from the telecommunications network. Examples of such architectures are disclosed in WO2015/026785 A2, US2003/153302 A1 and EP3136759 A1. However, such a possibility is unable to take precisely into account what the locally available or existent conditions actually are that influence the actual and specific access situation of an end user, customer or subscriber or network resources, error or health conditions and of the telecommunications network.

### SUMMARY

An object of the present invention is to provide a technically simple, effective and cost effective solution for operating a broadband access network and service deployment of a telecommunications network wherein the broadband access network comprises at least one central office point of delivery, the central office point of delivery comprising an access orchestrator entity or functionality, at least one element management system entity or functionality and a plurality of access nodes serving or being related to one or a plurality of end users or subscribers of the telecommunications network, wherein it is possible to take into account what the locally available or existent conditions, e.g. regarding an end user, customer or subscriber, actually are that influence the specific access situation within the telecommunications network. A further object of the present invention is to provide a corresponding broadband access network or corresponding telecommunications network, a corresponding system, a corresponding attribute catalogue entity or functionality or a corresponding central office point of delivery comprising an attribute catalogue entity or functionality.

The object of the present invention is achieved by a method for operating a broadband access network of a telecommunications network, the broadband access network comprising at least one central office point of delivery and the central office point of delivery comprising an access orchestrator entity or functionality, at least one element management system entity or functionality and a plurality of access nodes serving or being related to one or a plurality of end users or subscribers of the telecommunications network,
wherein the telecommunications network furthermore also comprises a business and/or operations support system,
wherein the central office point of delivery additionally comprises or is assigned or related to an attribute catalogue entity or functionality, the attribute catalogue entity or functionality realizing a decentralized and/or access-related subscription layer or subscriber portfolio catalogue, comprising subscription information regarding the plurality of end users or subscribers, wherein the method comprises the following steps:
   -- in a first step, a modification event message is received by the access orchestrator entity or functionality, wherein the modification event message reflects a subscriber-related modification and/or a network-related modification,
   -- in a second step, the access orchestrator entity or functionality contacts the attribute catalogue entity or functionality resulting in an update operation of the attribute catalogue entity or functionality adapted to the subscriber-related modification and/or the network-related modification.

It is thereby advantageously possible according to the present invention to provide a solution such that, e.g., ad hoc modifications regarding access lines are possible to be realized such that modifications regarding the usages of access lines or access ports on the one hand, and modifications of the respective service are able to be synchronized. Especially, it is advantageously possible, according to the present invention, to use an attribute catalogue or an attribute catalogue entity or functionality such that a decentralized and/or access-related subscription layer or subscriber portfolio catalogue is realized. Such an attribute catalogue or attribute catalogue entity or functionality stores or comprises subscription information regarding a plurality of end users or subscribers, especially the end users or subscribers that are handled by the respective (or considered) central office point of delivery, i.e. the end users or subscribers whose customer premises equipments or whose integrated access devices are connected, to the telecommunications network, via access nodes as part of the considered central office point of delivery. Due to the special characteristics of the elements of the central office point of delivery, it is possible to record and synchronize usage changes and service adjustments in a different manner, i.e. by means of using the attribute catalog or attribute catalogue entity or functionality, compared to the conventionally used or implemented manner. Especially according to the present invention, it is advantageously possible to provide for an automatic, individual (subscriber) portfolio update (by gathering information from different network resources of the telecommunications network); this is especially possible starting almost immediately after a (subscriber or end user) connection is activated. Furthermore, it is advantageously possible to provide for an automatic, individual (subscriber) network update when changes are made to a network element that is connected to other network elements of the customer. Still furthermore, it is advantageously possible to provide for an automatic detection and setup of a changed service or connection usage with an optional verification via an application (app verification). Still furthermore, it is advantageously possible to provide for an automatic and setup of a special service.

According to the present invention, it is especially possible that subscriber data are pulled towards the attribute catalogue entity or functionality of the respective considered central office point of delivery, and this in response to an access event, i.e. a modification or modification event detected by an access-related entity, especially part of the considered central office point of delivery. This is contrast to the conventionally pursued course of action, where typically subscriber data are pushed (by a rather central service or application) towards the respective access-related or access-oriented entities but without taking into consideration the real (technical) conditions actually existing. For example, according to the present invention, it is advantageously possible that the process of activating (or the activation process of) a specific access line (e.g. by means of connecting or powering up customer premises equipment connected to that access line) not only provides the identity information regarding the specific access line (or hardware equipment involved) as well as, perhaps, a set of assumed (or nominally available, as retrievable from a rather centralized repository) access line parameters (especially in a product-agnostic manner like delay, available bandwidth, oversubscription ratio related to typical traffic monitoring, available quality-of-service classes, available network and slices, function/service availability, topology information of radio data of access points) but that the detailed technically usable and actually realized or usable access line parameters are transmitted upon a power up event, such as, e.g., comprising the effective usable maximum bandwidth or further parameters such as the splitting ratio (i.e. how many nodes or access devices are sharing a specific common resource or transmission resource), or which type of SFP (small form pluggable) device is used for a specific passive optical network, PON, tree.

In the context of the present invention, the term access orchestrator entity or functionality especially means steering entity or functionality, i.e. an entity or functionality having inter alia steering capabilities. Furthermore, in the context of the present invention, it is primarily assumed that a message or a trigger event is exchanged between different elements or network nodes. However, in case such different elements or network nodes are implemented as part of a compute node or integrated system, the respective messages or triggers are to be interpreted or understood as signals.

In a conventionally known telecommunications network, there might be a self-service application that communicates with BSS/OSS applications such that end users or subscriber (or customers) are able to make changes to the network services they have booked. New customer interfaces may allow to input configurational changes to a repository of the telecommunications network. However, the transition to the self-service application always involves a break, i.e. pieces of information regarding the state or the situation of a specific access line is not directly taken into consideration: On the one hand, the network elements and the application are decoupled from each other (hence causing the above mentioned break), and on the other hand, the settings in the application by the customer and the usage are two different processes.

In contrast to the abilities of conventionally known telecommunications networks, It is in the customer's interest to allow spontaneous changes in usage within the framework of agreed conditions, and to support them as best as possible. In order to enable spontaneous changes, it is necessary to know the framework conditions of the network and to avoid contract-critical effects on other subscribers or services. According to the present invention, the capabilities of the central office point of delivery, and especially of the attribute catalogue entity or functionality, the access orchestrator entity or functionality, and the element management system entity or functionality, are used to detect dependencies of connections and services in real time. Hence, due to the special features of the elements and components of the central office point of delivery (especially the afore-mentioned), it is advantageously possible to capture and synchronize usage changes and service adjustments such that flexibility and ease of use (as well as, for the end user or subscriber, ease of being provided with communication services and modifications of communications services as fast as possible, especially by using the attribute catalogue as part of the central office point of delivery.

The telecommunications network according to the present invention might be a fixed-line telecommunications network or a mobile communication network but could also have both aspects, i.e. parts of a fixed-line telecommunications network (or being a fixed-line telecommunications network in such parts) and parts of a mobile communication network (or being a mobile communication network in such parts); such networks are also known under the term fixed-mobile-convergence networks (FMC networks).

Furthermore, it is advantageously possible and preferred according to the present invention that the modification event message is an event message related to
-- an access-related or subscriber-related event or modification, or
-- a network-related event or modification,
wherein the modification event message is especially able to be checked in real-time by the access orchestrator entity or functionality and/or by the attribute catalogue entity or functionality, especially with respect to:
-- local data and/or current data regarding the central office point of delivery and/or its current state of operation or regarding other users of the central office point of delivery,
-- data, especially subscriber-related data, of or retrieved from the business and/or operations support system and/or of or retrieved from the element management system entity or functionality,
wherein the telecommunications network comprises - besides the central office point of delivery - at least one further central office point of delivery, the further central office point of delivery comprising a further access orchestrator entity or functionality.

By means of the modification event message being an event message related to either an access-related (or subscriber-related) event or modification, or to a network-related event or modification, it is advantageously possible according to the present invention that all kinds of events are able to be handled in a direct and access-related manner.
Furthermore, by means of the attribute catalogue entity or functionality realizing a decentralized and/or access-related subscription layer or subscriber portfolio catalogue, comprising subscription information regarding the plurality of end users or subscribers, and by means of especially the modification event message being able to be checked in real-time by the access orchestrator entity or functionality and/or by the attribute catalogue entity or functionality, it is advantageously possible that an action (e.g. a customer's action on a network access such as, e.g. a port-up event) directly (or also: automatically - i.e. triggered by network nodes or instances of the considered central office point of delivery concerned and without further intervention or initiative of network entities being more central to the telecommunications network, such as the business and/or operations support system) leads to the corresponding setup/adjustment, such as, e.g., of the customer interface and/or a subscriber-related portal.

According to a further preferred embodiment of the present invention, the modification event message is related to a port up event of a specific subscriber of the central office point of delivery, wherein - as part of the second step - a look-up-trigger message is sent, by the access orchestrator entity or functionality, to the attribute catalogue entity or functionality, wherein subsequent to the look-up-trigger message, the update operation involves an exchange of data with the element management system entity or functionality and/or the business and/or operations support system and/or the further access orchestrator entity or functionality,
wherein especially:
-- the look-up-trigger message comprises a secret or encrypted information,
-- the access orchestrator entity or functionality transmits a portal message to a subscriber-related portal, the portal message comprising the secret or encrypted information, and
-- the attribute catalogue entity or functionality transmits a further portal message to the subscriber-related portal, the further portal message comprising the secret or encrypted information.

Thereby, it is advantageously possible to easily and effectively implement the inventive method.

According to a further embodiment of the present invention, the modification event message is related to an individual subscriber-related portfolio update event of a specific subscriber of the central office point of delivery, wherein - as part of the second step - a modification event message is sent, by the access orchestrator entity or functionality, to the attribute catalogue entity or functionality, wherein subsequent to the modification event message, the update operation involves an exchange of data with the element management system entity or functionality and/or the business and/or operations support system and/or the further access orchestrator entity or functionality.

Thereby, it is advantageously possible to easily and effectively implement the inventive method.

Furthermore, according to a preferred embodiment of the present invention, the modification event message is related to an individual subscriber-related portfolio update event of a specific subscriber of the central office point of delivery, wherein - as part of the second step and in view of a special traffic flow potentially used by the specific subscriber - a special flow start message is sent, by the access orchestrator entity or functionality, to the attribute catalogue entity or functionality, wherein subsequent to the special flow start message, the update operation involves an exchange of data with the element management system entity or functionality and/or the business and/or operations support system and/or the further access orchestrator entity or functionality,
wherein the update operation furthermore involves allowing at least one out of the initiation of the special traffic flow and the completion of the specific traffic flow, especially by means of the access orchestrator entity or functionality transmitting a special flow confirmation message to a subscriber-related portal of the specific subscriber or to the specific subscriber itself and/or by means of the access orchestrator entity or functionality receiving a special flow stop message from a subscriber-related portal of the specific subscriber or from the specific subscriber itself,
wherein especially the update operation involves an update operation between the business and/or operations support system and the subscriber-related portal of the specific subscriber or the specific subscriber itself.

Thereby, it is advantageously possible to easily and effectively implement the inventive method.

According to a further embodiment of the present invention, the modification event message is related to an individual subscriber-related portfolio update event of a specific subscriber of the central office point of delivery, wherein - as part of the second step - an extra service message is sent, by the access orchestrator entity or functionality, to the attribute catalogue entity or functionality, wherein subsequent to the extra service message, an exchange of data with the element management system entity or functionality and/or the business and/or operations support system and/or the further access orchestrator entity or functionality,
wherein the update operation furthermore involves allowing at least one out of the initiation of the extra service and the completion of the extra service, especially by means of the access orchestrator entity or functionality transmitting an extra service confirmation message to the subscriber-related portal of the specific subscriber or to the specific subscriber itself and/or by means of the access orchestrator entity or functionality receiving an extra service stop message from a subscriber-related portal of the specific subscriber or from the specific subscriber itself.

Thereby, it is advantageously possible to easily and effectively implement the inventive method.

According to a further embodiment of the present invention, - as part of the second step and prior to either the special flow confirmation message or the extra service confirmation message being sent by the access orchestrator entity or functionality to the subscriber-related portal of the specific subscriber or to the specific subscriber itself - a start verification request message is sent, by the attribute catalogue entity or functionality, to the subscriber-related portal of the specific subscriber or to the specific subscriber itself, and a start verification response message is sent to the attribute catalogue entity or functionality by the subscriber-related portal of the specific subscriber or the specific subscriber itself, wherein the start verification request message and the start verification response message is related to the start of either the special flow or the extra service.

Thereby, it is advantageously possible to easily and effectively implement the inventive method.

Furthermore, according to an embodiment of the present invention, the central office point of delivery comprises a switching fabric, the switching fabric comprising a plurality of spine network nodes and a plurality of leaf network nodes.

Furthermore, the present invention relates to a broadband access network or telecommunications network comprising a broadband access network, the broadband access network comprising at least one central office point of delivery and the central office point of delivery comprising an access orchestrator entity or functionality, at least one element management system entity or functionality and a plurality of access nodes serving or being related to one or a plurality of end users or subscribers of the telecommunications network,
wherein the telecommunications network furthermore also comprises a business and/or operations support system
wherein the central office point of delivery additionally comprises or is assigned or related to an attribute catalogue entity or functionality, the attribute catalogue entity or functionality realizing a decentralized and/or access-related subscription layer or subscriber portfolio catalogue, comprising subscription information regarding the plurality of end users or subscribers, wherein the broadband access network or the telecommunications network is configured such that:
   -- a modification event message is received by the access orchestrator entity or functionality, wherein the modification event message reflects a subscriber-related modification and/or a network-related modification,
   -- the access orchestrator entity or functionality contacts the attribute catalogue entity or functionality resulting in an update operation of the attribute catalogue entity or functionality adapted to the subscriber-related modification and/or the network-related modification.

Furthermore, the present invention relates to a system for operating a broadband access network of a telecommunications network, the system comprising the telecommunications network and the broadband access network, the broadband access network comprising at least one central office point of delivery and the central office point of delivery comprising an access orchestrator entity or functionality, at least one element management system entity or functionality and a plurality of access nodes serving or being related to one or a plurality of end users or subscribers of the telecommunications network,
wherein the telecommunications network furthermore also comprises a business and/or operations support system
wherein the central office point of delivery additionally comprises or is assigned or related to an attribute catalogue entity or functionality, the attribute catalogue entity or functionality realizing a decentralized and/or access-related subscription layer or subscriber portfolio catalogue, comprising subscription information regarding the plurality of end users or subscribers, wherein the system is configured such that:
   -- a modification event message is received by the access orchestrator entity or functionality, wherein the modification event message reflects a subscriber-related modification and/or a network-related modification,
   -- the access orchestrator entity or functionality contacts the attribute catalogue entity or functionality resulting in an update operation of the attribute catalogue entity or functionality adapted to the subscriber-related modification and/or the network-related modification.

Additionally, the present invention relates to an attribute catalogue entity or functionality or central office point of delivery comprising an attribute catalogue entity or functionality provided to be used as part of an inventive system or as part of an inventive broadband access network or telecommunications network.

Still additionally, the present invention relates to a program comprising a computer readable program code which, when executed on a computer and/or on a network node of a telecommunications network and/or on a access orchestrator entity or functionality of a central office point of delivery and/or on an attribute catalogue entity or functionality of a central office point of delivery, or in part on the network node of a telecommunications network and/or in part on the access orchestrator entity or functionality of a central office point of delivery and/or in part on the attribute catalogue entity or functionality of the central office point of delivery, causes the computer and/or the network node of the telecommunications network and/or the access orchestrator entity or functionality of the central office point of delivery and/or the attribute catalogue entity or functionality of the central office point of delivery to perform the inventive method.

Furthermore, the present invention relates to a computer-readable medium comprising instructions which when executed on a computer and/or on a network node of a telecommunications network and/or on a access orchestrator entity or functionality of a central office point of delivery and/or on an attribute catalogue entity or functionality of a central office point of delivery, or in part on the network node of a telecommunications network and/or in part on the access orchestrator entity or functionality of a central office point of delivery and/or in part on the attribute catalogue entity or functionality of the central office point of delivery, causes the computer and/or the network node of the telecommunications network and/or the access orchestrator entity or functionality of the central office point of delivery and/or the attribute catalogue entity or functionality of the central office point of delivery to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with a central office point of delivery.
Figure 2 schematically shows in greater detail the central office point of delivery comprising a certain number of components, entities and/or network nodes, as well as further entities and/or network nodes being connected to the central office point of delivery.
Figures 3 schematically illustrates a communication diagram showing the basic functionality according to the present invention.
Figures 4 to 8 schematically illustrate further communication diagrams showing examples according to the present invention in greater detail.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order; this is especially the case for the terms "first step", "second step", etc. It is to be understood that the terms so used are interchangeable under appropriate circumstances and that the embodiments of the invention described herein are capable of operation in other sequences than described or illustrated herein.

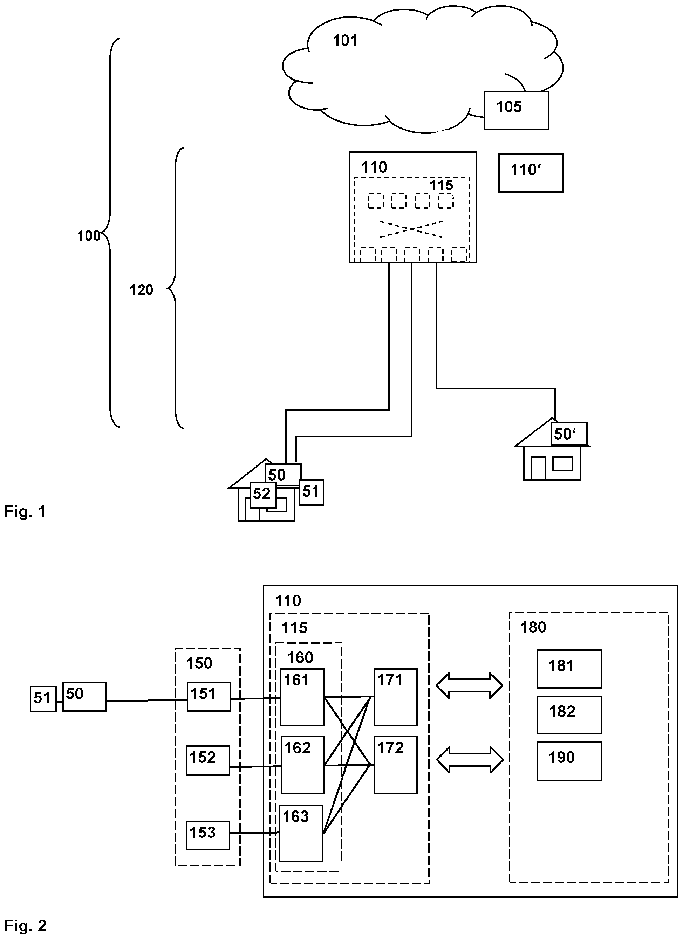

In Figure 1, a telecommunications network 100 according to the present invention is schematically shown, having - preferably - at least a fixed line part. A mobile (or cellular) part might be present as well, as part of the telecommunications network 100, but is not specifically illustrated in Figure 1. User equipments or client devices 51, 52 are connected to the telecommunications network 100 by means of a (broadband) access network 120. The telecommunications network 100 comprises, especially as part of the broadband access network 120, at least one logical or physical central office point of delivery 110 that is preferably realized within a (mini) data center and that is especially handling different access requirements, especially different access possibilities, of the client devices 51, 52 to network functionalities provided by the telecommunications network 100 or via the telecommunications network 100. In addition, the telecommunications network 100 typically also comprises - besides the broadband access network 120 - a core network 101. The client devices 51, 52 are typically connected to the logical or physical central office point of delivery 110 by means of a customer premises equipment device 50, 50' or by means of a customer premises equipment functionality that might be built into or realized by the client devices 51, 52. Preferably but not necessarily, the central office point of delivery 110 comprises a switching fabric 115 comprising a plurality of spine network nodes and typically also a plurality of leaf network nodes which are not explicitly represented in Figure 1. The telecommunications network 100 furthermore also comprises a business and/or operations support system 105.

Figure 2 schematically illustrates a central office point of delivery 110 as part of a broadband access network 120 of a telecommunications network 100, wherein the represented part of the telecommunications network 100 (or the central office point of delivery 110) comprises a control functionality or control plane 180, wherein the control functionality or control plane 180 especially comprises an access orchestrator entity or functionality 181, at least one element management system entity or functionality 182. Furthermore, the central office point of delivery 110 comprises a plurality of access nodes 151, 152, 153 (or also called line termination nodes 151, 152, 153) as part of an access functionality 150. In the example represented in Figure 2, the broadband access network 120 comprises three access nodes, a first access node 151, a second access node 152, and a third access node 153. The access nodes 151, 152, 153 might be provided to support different access technologies to a home gateway or customer premises equipment or cable modem (or integrated access device) 50. Hence, a client device 51 (or a plurality of client devices which are not specifically represented in Figure 2) is (or are) connected to the telecommunications network 100 (i.e. to the first access node 151 or hybrid fiber coaxial network equipment) via the cable modem 50 (or customer premises equipment 50 or home gateway device 50). The functionality of the client device 51 and the functionality of the customer premises equipment 50 (or home gateway device 50 or cable modem 50) might be integrated in one device or "box". Nevertheless, these functionalities are represented in Figure 2 as separated functionalities. In Figure 2, only one cable modem device 50 (or customer premises equipment 50) (i.e. a specific customer premises equipment), and only one client device 51 are shown. However, also the second and/or third access nodes 152, 153 provide network access to end users or customers and the respective customer premises equipment devices or integrated access devices (not shown in Figure 2). In the exemplary embodiment of the central office point of delivery 110 shown in Figure 2, the central office point of delivery 110 comprises a switching fabric 115 as a transport functionality or service 115 within the central office point of delivery 110. The switching fabric 115 (or transport functionality or service 115) comprises a plurality of spine network nodes 171, 172 and a plurality of leaf network nodes 161, 162, 163, the leaf network nodes 161, 162, 163 (i.e., according to the exemplary embodiment shown in Figure 2, a first leaf network node 161, a second leaf network node 162, and a third leaf network node 163) especially providing the edge functionality or service 160 within the central office point of delivery 110.
Hence, the access nodes are serving or being related to one or a plurality of end users or subscribers (and the corresponding customer premises equipment devices and client devices) of the telecommunications network 100; for the sake of simplicity, Figure 2 only shows one customer premises equipment 50 and one client device 51, being connected to the first access node 151 of the central office point of delivery 110.

According to the present invention, the central office point of delivery 110 additionally comprises or is assigned or related to an attribute catalogue entity or functionality 190, the attribute catalogue entity or functionality 190 realizing a decentralized and/or access-related subscription layer or subscriber portfolio catalogue, comprising subscription information regarding the plurality of end users or subscribers.

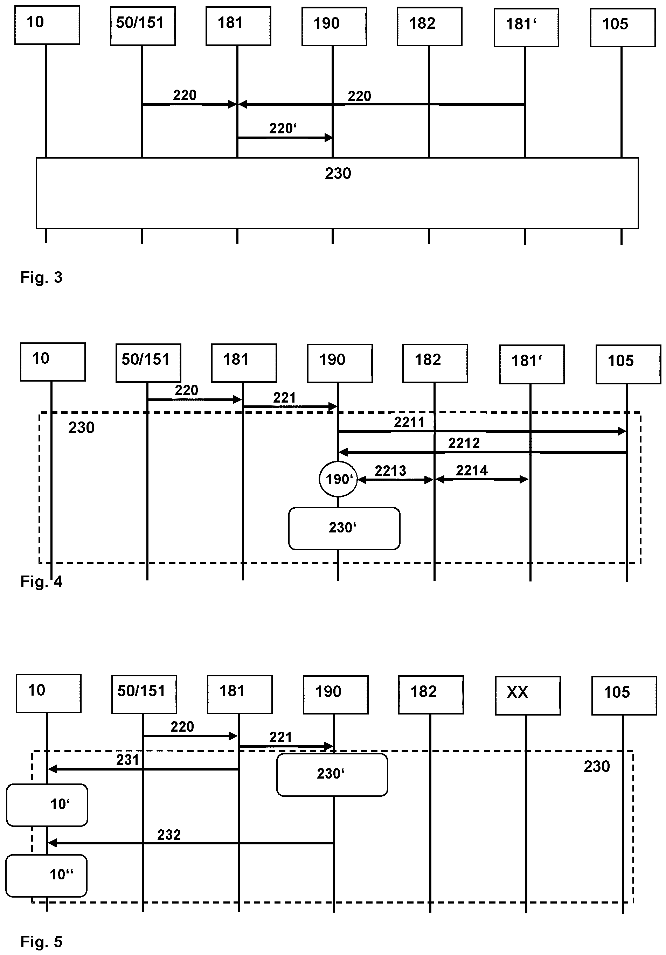

According to the present invention, a method for operating a broadband access network 120 of a telecommunications network 100 is provided, wherein the broadband access network 120 comprises at least one central office point of delivery 110 and the central office point of delivery 110 comprising an access orchestrator entity or functionality 181, at least one element management system entity or functionality 182 and a plurality of access nodes 151, 152, 153 serving or being related to one or a plurality of end users or subscribers of the telecommunications network 100. Additionally, the telecommunications network 100 furthermore also comprises a business and/or operations support system 105, and the central office point of delivery 110 additionally comprises or is assigned or related to an attribute catalogue entity or functionality 190. The attribute catalogue entity or functionality 190 realizes a decentralized and/or access-related subscription layer or subscriber portfolio catalogue, comprising subscription information regarding the plurality of end users or subscribers. Basically, the inventive method is represented in Figure 3: In a first step, a modification event message 220 is received by the access orchestrator entity or functionality 181, wherein the modification event message 220 reflects a subscriber-related modification and/or a network-related modification, and in a second step, the access orchestrator entity or functionality 181 contacts the attribute catalogue entity or functionality 190 especially by means of a message designated in Figure 3 by means of reference sign 220' resulting in an update operation 230 of the attribute catalogue entity or functionality 190 adapted to the subscriber-related modification and/or the network-related modification. Figure 3 schematically shows the situation of the access orchestrator entity or functionality 181 receiving a first modification event message 220 from the subscriber side, i.e. from the access node 151 or the customer premises equipment 50, reflecting a subscriber-related modification, and additionally also a second or further modification event message 220 from the network side, this network-side-related second or further modification event message 220 being received, e.g., from an access orchestrator entity or functionality 181' or from a plurality of access orchestrator entities or functionalities 181' related to other central office points of delivery within the telecommunications network 100. Typically according to the present invention, only one modification event message 220 is received by the access orchestrator entity or functionality 181 of the central office point of delivery 110 i.e. the two modification event messages 220 shown in Figure 3 are to be understood as alternatives; however the case of two modification event messages 220 arriving either synchronously or almost synchronously at the access orchestrator entity or functionality 181 is not excluded here. As already mentioned, after reception of the modification event message 220 or messages 220, the access orchestrator entity or functionality 181 contacts the attribute catalogue entity or functionality 190 resulting in an update operation 230 of the attribute catalogue entity or functionality 190 adapted to the subscriber-related modification and/or to the network-related modification. Hence, it is especially preferred according to the present invention that the modification event message 220 is an event message related to
-- an access-related or subscriber-related event or modification, and/or
-- a network-related event or modification.

Moreover, the modification event message 220 is especially able to be checked in real-time by the access orchestrator entity or functionality 181 and/or by the attribute catalogue entity or functionality 190, especially with respect to:
-- local data and/or current data regarding the central office point of delivery 110 and/or its current state of operation or regarding other users of the central office point of delivery 110,
-- data, especially subscriber-related data, of or retrieved from the business and/or operations support system 105 and/or of or retrieved from the element management system entity or functionality 182.

Typically, the telecommunications network 100 comprises not only one central office point of delivery (i.e. the central office point of delivery 110 that is also called the considered central office point of delivery) but a plurality of central office points of delivery, i.e. besides the (considered, or also called specific) central office point of delivery 110, there is at least one, but preferably a plurality of further central office points of delivery. In order to schematically reflect this in the figures, a further central office point of delivery 110' is schematically designated, in Figure 1, by reference sign 110'. Like the considered central office point of delivery 110, also this further central office point of delivery 110' comprises a (further) access orchestrator entity or functionality (designated in Figures 3 to 8 by means of reference sign 181'). Hence, the telecommunications network 100 preferably comprises - besides the central office point of delivery 110 - at least the one further central office point of delivery 110', the further central office point of delivery 110' comprising the further access orchestrator entity or functionality 181'.

In Figures 4 to 8 further communication diagrams showing examples according to the present invention are schematically shown in greater detail. All these communication diagrams are communication diagrams (as also Figure 3) between
-- the business and/or operations support system 105,
-- other network components, or network nodes 181', especially from an access orchestrator entity or functionality 181' or from a plurality of access orchestrator entities or functionalities 181' of other central office points of delivery of the telecommunications network 100,
-- the element management system entity or functionality 182 (of the considered central office point of delivery 110),
-- the attribute catalogue entity or functionality 190 of the considered central office point of delivery 110,
-- the access orchestrator entity or functionality 181 of the considered central office point of delivery 110,
-- the access node 151 or customer premises equipment 50 of a considered end user or subscriber, and
-- a subscriber portal 10 (or end user portal 10).

Specifically, Figure 4 shows details of the communication regarding or implementing an automatic, individual (subscriber) portfolio update when a connection is activated by gathering information on network resources and capabilities from, e.g., the business and/or operations support system 105 of the telecommunications network 100, a self-service application or subscriber portal 10 (or end user portal 10), and/or from further network elements of the telecommunications network 100.
The automatic, individual (subscriber) portfolio update is performed by the modification event message 220 being related to a port up event of the considered (or specific) subscriber of the (considered) central office point of delivery 110 (in Figures 4 to 8 indicated by means of reference sign 50/151, i.e. the port up event is generated (or at least transmitted) by the corresponding considered access node 151 to which the considered customer premises equipment 50 is connected). As part of the second step according to the present invention, a look-up-trigger message 221 is sent, by the access orchestrator entity or functionality 181, to the attribute catalogue entity or functionality 190. Subsequent to the look-up-trigger message 221, the update operation 230 involves an exchange of data with the element management system entity or functionality 182 and/or the business and/or operations support system 105 and/or the further access orchestrator entity or functionality 181'. For example, this is realized by means of one or a plurality of different information request messages and information response messages exchanged between the attribute catalogue entity or functionality 190 and the business and/or operations support system 105. As an example, one such information request message is schematically indicated, in Figure 4, by means of reference sign 2211, and one such information response message is schematically indicated, in Figure 4, by means of reference sign 2212. Furthermore an exchange of information 190' of (or triggered by) the attribute catalogue entity or functionality 190 with further network nodes or network entities is initiated or performed, indicated, in Figure 4, by means of reference sign 2213 with regard to the element management system entity or functionality 182, and by means of reference sign 2214 with regard to the further access orchestrator entity or functionality 181' (or a plurality thereof). After these processing steps of exchanges of information 190' or information requests/responses 2211, 2212, a catalogue update 230' (of the attribute catalogue entity or functionality 190) is performed as part of the update operation 230 of the attribute catalogue entity or functionality 190.

Hence, when the user (subscriber) starts up the port, a "Port Up" event (i.e. the modification event message 220) is generated, which is registered by the access network element (in the example shown in Figure 4 especially the access node 151 and/or the access orchestrator entity or functionality 181). A conventional subscriber verification (i.e. especially including an operation with an AAA network element (Authentication Authorization Accounting network element) or a policy control element, which is not specifically represented in Figure 4) is performed by the network element, i.e. especially by or initiated by the access orchestrator entity or functionality 181. If successful, the access orchestrator entity or functionality 181 generates the "Look-Up Trigger" message 221 to the attribute catalogue entity or functionality 190. With the "Look-Up Trigger" message 221 or in connection with it, the network element (i.e. especially the customer premises equipment 50 and/or the access node 151 and/or the access orchestrator entity or functionality 181) sends further customer connection-specific data to the attribute catalogue entity or functionality 190. A corresponding record is created in the attribute catalogue entity or functionality 190 for the customer's network access data received from the network element or network elements.
Based on the data received via the Look-Up Trigger message 221, a data collection process (indicated in Figure 4 by the exchange of information 190') is automatically triggered via or by the attribute catalogue entity or functionality 190. The catalog application (i.e. an application of the attribute catalogue entity or functionality 190) is connected to business and/or operations support system 105, especially via classical interfaces, for such data collection (cf. the information requests/responses 2211, 2212 shown in Figure 4). The information obtained about subscribers and products (subscriptions) is stored in the attribute catalogue entity or functionality 190 in addition to the existing network access data.
The catalog (i.e. a repository of the attribute catalogue entity or functionality 190) is filled up to a predetermined level. When the scheduled level is reached, a first stage of the automated data compilation (or automatic data gathering) according to this embodiment of the present invention is complete.

Especially in the context of implementing the automatic, individual (subscriber) portfolio update (e.g. when a subscriber connection is activated), it is preferred, according to the present invention (and schematically shown in Figure 5), that the look-up-trigger message 221 comprises a secret or encrypted information, that the access orchestrator entity or functionality 181 transmits a portal message 231 to the subscriber-related portal 10, wherein the portal message 231 comprises the secret or encrypted information, and that the attribute catalogue entity or functionality 190 transmits a further portal message 232 to the subscriber-related portal 10, the further portal message 232 likewise comprising the secret or encrypted information.
Hence, especially, it is advantageously possible (especially with respect to the implementation of an automatic, individual (subscriber) portfolio update) to provide for a dynamic, access-triggered, network state display (especially in the subscriber-related portal 10).
In this case, the corresponding network element (i.e. the customer premises equipment 50, the access node 151 and/or the access orchestrator entity or functionality 181) may send the look-up-trigger message 221 as a "unique-lookup-secret" message (i.e. the look-up-trigger message 221 comprises the secret or encrypted information) to the subscriber-related portal 10, i.e. a customer interface (e.g., self-service portal), in connection with the startup of the connection (or access line of the considered subscriber). Based on this message, an environment (or context) is prepared (by means of a first corresponding setup and/or update procedure 10' of the subscriber context within the subscriber-related portal 10) in the customer interface application (i.e. in the subscriber-related portal 10) for the new setup or adaptation of a customer access. In Figure 5, a second corresponding setup and/or update procedure 10" of the subscriber context within the subscriber-related portal 10 is schematically shown. The catalogue update 230' (of the attribute catalogue entity or functionality 190), mentioned earlier as part of the update operation 230 with respect to Figure 4, is also schematically shown in Figure 5.

In summary, and regarding the processing steps, data exchanges and messages described with respect to both Figures 4 and 5, this means that the customer's action on a network access (i.e. in the example the port-up event) directly (or also: automatically - i.e. triggered by network nodes or instances of the considered central office point of delivery 110 concerned and without further intervention or initiative of network entities being more central to the telecommunications network 100, such as the business and/or operations support system 105) leads to the setup/adjustment of the customer interface (i.e. the subscriber-related portal 10).

According to a further variant of the embodiment shown in Figure 4, a modification event message 220 could also arrive from the network side (not represented in Figure 4), wherein such a network-side initiated modification event message 220, e.g. relates to extensions of product properties. Hence, in case of network-triggered initial setup/adjustment, the customer interface application waits for a message (portfolio update) of the attribute catalogue, especially without business and/or operations support system involvement (i.e. messages corresponding to messages 2211 and 2212 are not mandatory).

After the data collection phase shown in Figure 4 (i.e. the catalogue update 230'), there is, hence, enough information for the creation/adjustment of the customer related portfolio. This is dynamically provided to the customer interface application (i.e. the subscriber-related portal 10) with a "subscriber and portfolio information" message (i.e. the further portal message 232 to the subscriber-related portal 10) from the attribute catalogue entity or functionality 190. In addition to the name-giving information about the user-relevant portfolio, the message contains the "unique trigger secret" (i.e. the secret or encrypted information). If the security features match, the customer-related record is automatically created or adjusted in the customer interface application 10, and the next time the customer interface application is called up by the customer, the updated data is displayed.

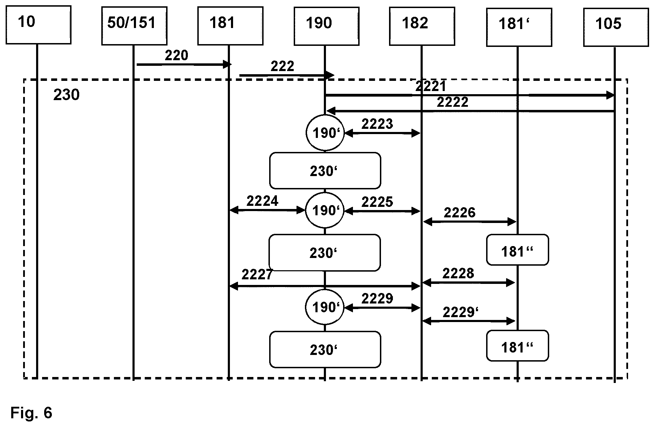

Specifically, Figure 6 shows details of the communication regarding or implementing an automatic, individual (subscriber) network update in case of changes to a network element connected to other network elements of the customer, e.g. connection of a new endpoint to a private customer network, creation of a point-to-point, point-to-multipoint connection and/or customizing transmission frame parameters, filter criteria, service capabilities, etc.
The automatic, individual (subscriber) network update is performed by the modification event message 220 being related to an individual subscriber-related portfolio update event of a specific subscriber of the central office point of delivery 110 (in Figures 4 to 8 indicated by means of reference sign 50/151, i.e. the port up event is generated (or at least transmitted) by the corresponding considered access node 151 to which the considered customer premises equipment 50 is connected). As part of the second step according to the present invention, a modification event message 222 is sent, by the access orchestrator entity or functionality 181, to the attribute catalogue entity or functionality 190. Subsequent to the modification event message 222, the update operation 230 involves an exchange of data with the element management system entity or functionality 182 and/or the business and/or operations support system 105 and/or the further access orchestrator entity or functionality 181'. For example, this is realized by means of one or a plurality of different information request messages and information response messages exchanged between the attribute catalogue entity or functionality 190 and the business and/or operations support system 105. As an example, one such information request message is schematically indicated, in Figure 6, by means of reference sign 2221, and one such information response message is schematically indicated, in Figure 6, by means of reference sign 2222. Furthermore an exchange of information 190' of (or triggered by) the attribute catalogue entity or functionality 190 with further network nodes or network entities is initiated or performed, indicated, in Figure 6, by means of reference sign 2223 with regard to the element management system entity or functionality 182. After these processing steps of exchanges of information 190' or information requests/responses 2221, 2222, a catalogue update 230' (of the attribute catalogue entity or functionality 190) is performed as part of the update operation 230 of the attribute catalogue entity or functionality 190.
A further exchange of information 190' of (or triggered by) the attribute catalogue entity or functionality 190 is initiated and performed with further network nodes or network entities, indicated, in Figure 6, by means of reference signs 2224 (with regard to the access orchestrator entity or functionality 181), 2225 (with regard to the element management system entity or functionality 182) as well as 2226 (with regard to the further access orchestrator entity or functionality 181'). After these processing steps of exchanges of information 190' or information requests/responses 2211, 2212, a further catalogue update 230' (of the attribute catalogue entity or functionality 190) - as well as a setting adaption procedure 181" of the further access orchestrator entity or functionality 181' - is performed as part of the update operation 230 of the attribute catalogue entity or functionality 190. Furthermore an event message 2227 (or event messages 2227) are exchanged between the access orchestrator entity or functionality 181 and the element management system entity or functionality 182 as well as a further event message 2228 (or further event messages 2228) are exchanged between the element management system entity or functionality 182 and the further access orchestrator entity or functionality 181'. After these processing steps, and a still further exchange of information 190' or a dynamic data exchange 2229 and dynamic configuration 2229' is performed as part of the update operation 230 of the attribute catalogue entity or functionality 190, wherein subsequently a still further catalogue update 230' (of the attribute catalogue entity or functionality 190) - as well as a setting modification procedure 181" of the further access orchestrator entity or functionality 181' - is performed as part of the update operation 230 of the attribute catalogue entity or functionality 190.
Hence, an automatic, individual (subscriber) network update is able to be performed according to the present invention. Changes (modification) to the subscriber line are noticed immediately by the line element (i.e. the customer premises equipment 50 or access node 151 or access orchestrator entity or functionality 181). This includes unplanned changes to the connection settings (e.g. errors) as well as intentional configuration on the customer side (subscriber). If a subscription or usage includes several ports of the telecommunications network 100 (i.e. several access lines), this applies to each port within this group. Configuration-relevant information is sent as a modification event from the connection element to the attribute catalog. Depending on the situation, i.e. optional, the attribute catalog automatically triggers another data collection. If necessary, the data of the other central office points of delivery or network elements (i.e. the further access orchestrator entity or functionality 181' as an example) are updated and then matched in the catalog (catalog update). In this way, the attribute catalogue entity or functionality 190 represents a subscription view that is as close as possible to real operations. In the event of unplanned changes, automatic, temporary workarounds can be triggered in the access element and the other network elements (amounting to a self-healing procedure).

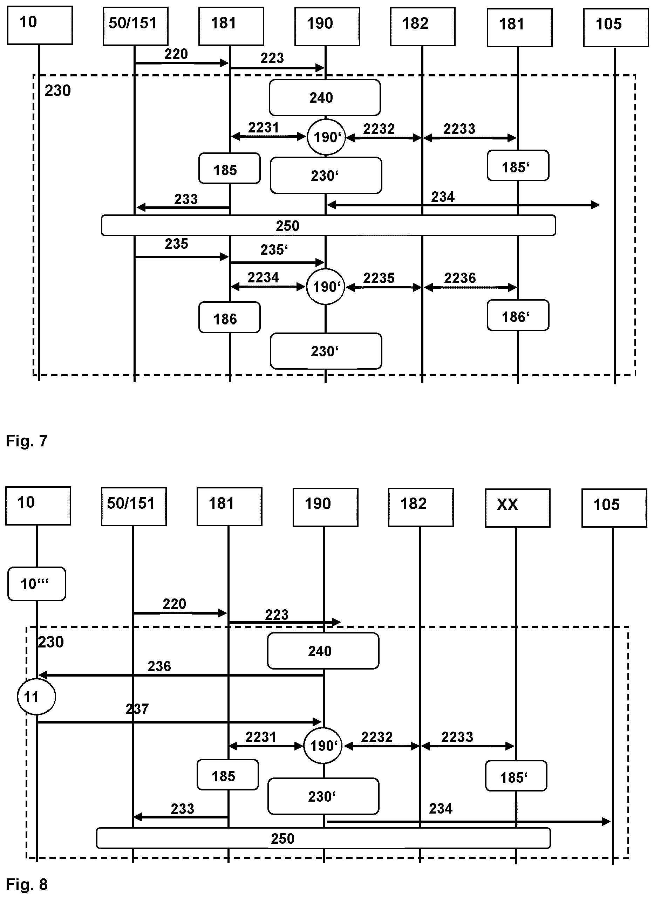

Specifically, Figure 7 shows details of the communication regarding or implementing an automatic detection and setup of a changed service or connection usage, e.g. an automatic clarification of the technical framework by the network, and/or an adaptation of data streams (flows) to the changed requirements/framework conditions and/or an adjustment of the network elements used in each case (while ensuring that other services are not affected), and optionally a verification of usage via an app portal and/or information of the user about existing channels of a business and/or operations support system.
Furthermore, Figure 7 shows details of the communication regarding or implementing an automatic detection and setup of a special service, e.g. an automatic clarification of the technical framework by the network and/or setting of the network elements used in each case (while ensuring that other services are not affected) and/or activation of the special service module or modules, and optionally a verification of usage via an app portal and/or information of the user about existing channels of a business and/or operations support system.

The automatic detection and setup of a changed service or connection usage is performed by the modification event message 220 being related to an individual subscriber-related portfolio update event of a specific subscriber of the central office point of delivery 110 (in Figures 4 to 8 indicated by means of reference sign 50/151, i.e. the port up event is generated (or at least transmitted) by the corresponding considered access node 151 to which the considered customer premises equipment 50 is connected). As part of the second step according to the present invention and in view of a special traffic flow potentially used by the specific subscriber, a special flow start message 223 is sent, by the access orchestrator entity or functionality 181, to the attribute catalogue entity or functionality 190. Subsequent to the special flow start message 223, the update operation 230 involves an exchange of data with the element management system entity or functionality 182 and/or the business and/or operations support system 105 and/or the further access orchestrator entity or functionality 181'. The update operation 230 furthermore involves allowing at least one out of the initiation of the special traffic flow and the completion of the specific traffic flow, especially by means of the access orchestrator entity or functionality 181 transmitting a special flow confirmation message 233 to a subscriber-related portal 10 of the specific subscriber or to the specific subscriber itself and/or by means of the access orchestrator entity or functionality 181 receiving a special flow stop message 235 from a subscriber-related portal 10 of the specific subscriber or from the specific subscriber itself,
wherein especially the update operation 230 involves an update operation 234 between the business and/or operations support system 105 and the attribute catalogue entity or functionality 190. For example, this is realized by means of, as represented in Figure 7, a condition look up stage 240, performed by the attribute catalogue entity or functionality 190, followed by an exchange of information 190', involving a dynamic data exchange 2231 between the attribute catalogue entity or functionality 190 and the access orchestrator entity or functionality 181, as well as a dynamic data exchange 2232 between the attribute catalogue entity or functionality 190 and the element management system entity or functionality 182, and a dynamic configuration 2233 between the element management system entity or functionality 182 and the further access orchestrator entity or functionality 181'. Afterwards, a first setting adaption 185 is performed by the access orchestrator entity or functionality 181 and a further first setting adaption 185' is performed by the further access orchestrator entity or functionality 181'. Furthermore, a catalogue update 230' is performed by the attribute catalogue entity or functionality 190. Furthermore, the access orchestrator entity or functionality 181 transmits the special flow confirmation message 233 to the subscriber-related portal 10 of the specific subscriber or to the specific subscriber itself, and especially an update operation 234 is performed between the business and/or operations support system 105 and the attribute catalogue entity or functionality 190. The special flow traffic 250 is now able to be realized or enabled. Upon the termination of the special flow traffic 250, the access orchestrator entity or functionality 181 receives a special flow stop message 235 from a subscriber-related portal 10 of the specific subscriber or from the specific subscriber itself, and subsequently, a special flow stop request 235' is transmitted from the access orchestrator entity or functionality 181 to the attribute catalogue entity or functionality 190. A further exchange of information 190', involving a dynamic data exchange 2234 between the attribute catalogue entity or functionality 190 and the access orchestrator entity or functionality 181, as well as a dynamic data exchange 2235 between the attribute catalogue entity or functionality 190 and the element management system entity or functionality 182, and a dynamic configuration 2236 between the element management system entity or functionality 182 and the further access orchestrator entity or functionality 181', resulting in a second setting adaption 186 is performed by the access orchestrator entity or functionality 181 and a further second setting adaption 186' is performed by the further access orchestrator entity or functionality 181'. Furthermore, a further catalogue update 230' is performed by the attribute catalogue entity or functionality 190. Hence, an automatic detection and setup of a changed service or connection usage is able to be performed according to the present invention. In addition to detecting modifications, it is possible for the central office point of delivery 110 to detect the type of use of the connection (within the scope of previous agreements). A spontaneous change of transmission parameters (i.e. the implementation or the realization of a special flow) is registered by the access elements (especially the customer premises equipment 50, the access node 151) of the central office point of delivery 110. This means that rigid reactions to a transgression of agreed boundary conditions or service level agreements - as it is common in conventionally known telecommunications networks - are not necessary to implement or enforce according to the present invention. Due to the data collection and analysis, which is only possible in connection with the different (network) elements of the central office point of delivery 110, the respective network condition at the time of a flow change can be taken into account. A condition lookup in the attribute catalog 190 and a check and adaptation of further network conditions (catalog update, setting adaptation) extend the scope for spontaneous customer requests (i.e. special flows).

The temporary, automatic establishment of a special (or extra) service is performed by the modification event message 220 being related to an individual subscriber-related portfolio update event of a specific subscriber of the central office point of delivery 110 (in Figures 4 to 8 indicated by means of reference sign 50/151, i.e. the port up event is generated (or at least transmitted) by the corresponding considered access node 151 to which the considered customer premises equipment 50 is connected). As part of the second step according to the present invention and in view of a special or extra service potentially used by the specific subscriber, an extra service (start) message 223 is sent, by the access orchestrator entity or functionality 181, to the attribute catalogue entity or functionality 190. Subsequent to the extra service (start) message 223, the update operation 230 involves an exchange of data with the element management system entity or functionality 182 and/or the business and/or operations support system 105 and/or the further access orchestrator entity or functionality 181'. The update operation 230 furthermore involves allowing at least one out of the initiation of the extra service and the completion of the extra service, especially by means of the access orchestrator entity or functionality 181 transmitting an extra service confirmation message 233 to a subscriber-related portal 10 of the specific subscriber or to the specific subscriber itself and/or by means of the access orchestrator entity or functionality 181 receiving an extra service stop message 235 from a subscriber-related portal 10 of the specific subscriber or from the specific subscriber itself,
wherein especially the update operation 230 involves an update operation 234 between the business and/or operations support system 105 and the attribute catalogue entity or functionality 190. For example, this is realized by means of, as likewise represented in Figure 7, a condition look up stage 240, performed by the attribute catalogue entity or functionality 190, followed by an exchange of information 190', involving a dynamic data exchange 2231 between the attribute catalogue entity or functionality 190 and the access orchestrator entity or functionality 181, as well as a dynamic data exchange 2232 between the attribute catalogue entity or functionality 190 and the element management system entity or functionality 182, and a dynamic configuration 2233 between the element management system entity or functionality 182 and the further access orchestrator entity or functionality 181'. Afterwards, the first setting adaption 185 (corresponding to a start extra service module) is likewise performed by the access orchestrator entity or functionality 181 and a further first setting adaption 185' (likewise corresponding to a start extra service module) is performed by the further access orchestrator entity or functionality 181'. Furthermore, a catalogue update 230' is performed by the attribute catalogue entity or functionality 190. Furthermore, the access orchestrator entity or functionality 181 transmits the extra service (start) message 223 to the subscriber-related portal 10 of the specific subscriber or to the specific subscriber itself, and especially an update operation 234 is performed between the business and/or operations support system 105 and the attribute catalogue entity or functionality 190. The extra service 250 is now able to be realized or enabled. Upon the termination of the extra service 250, the access orchestrator entity or functionality 181 receives an extra service stop message 235 from a subscriber-related portal 10 of the specific subscriber or from the specific subscriber itself, and subsequently, an extra service stop request 235' is transmitted from the access orchestrator entity or functionality 181 to the attribute catalogue entity or functionality 190. A further exchange of information 190', involving a dynamic data exchange 2234 between the attribute catalogue entity or functionality 190 and the access orchestrator entity or functionality 181, as well as a dynamic data exchange 2235 between the attribute catalogue entity or functionality 190 and the element management system entity or functionality 182, and a dynamic configuration 2236 between the element management system entity or functionality 182 and the further access orchestrator entity or functionality 181', resulting in a second setting adaption 186 (corresponding to a stop extra service module) is performed by the access orchestrator entity or functionality 181 and a further second setting adaption 186' (likewise corresponding to a stop extra service module) is performed by the further access orchestrator entity or functionality 181'. Furthermore, a further catalogue update 230' is performed by the attribute catalogue entity or functionality 190. An end extra service response message (not represented in Figure 7) is furthermore transmitted, by the access orchestrator entity or functionality 190, to the subscriber-related portal 10 of the specific subscriber or to the specific subscriber itself. Hence, a temporary, automatic establishment of a special service or extra service is possible to be implemented or realized. Due to a special usage (e.g., connecting a special application), the access element detects the need for special treatment. After a check (see above), the need-based adjustments are made in the elements. Additionally, one or more modules (e.g. modules for test support) are started. After all modules have been successfully started, the service is automatically released for use. An end of use is also detected by the access element. The shutdown of the module is triggered via the catalog.

According to the present invention, it is especially preferred that - both for the automatic detection and setup of a changed service or connection usage, and the temporary, automatic establishment of a special (or extra) service - an optional release in an app is able to be realized. This is possible by means of - as part of the second step and prior to either the special flow confirmation message 233 or the extra service confirmation message being sent by the access orchestrator entity or functionality 181 to the subscriber-related portal 10 of the specific subscriber or to the specific subscriber itself - a start verification request message 236 being sent, by the attribute catalogue entity or functionality 190, to the subscriber-related portal 10 of the specific subscriber or to the specific subscriber itself, and a start verification response message 237 being sent to the attribute catalogue entity or functionality 190 by the subscriber-related portal 10 of the specific subscriber or the specific subscriber itself. The start verification request message 236 and the start verification response message 237 is related to the start of either the special flow or the extra service. For example, this is realized based on, as represented in Figure 8, an environment (or context) being prepared (by means of a corresponding setup and/or update procedure 10‴ of the subscriber context within the subscriber-related portal 10) in the customer interface application (i.e. in the subscriber-related portal 10). Subsequent to the special flow start message 223 or the extra service (start) message 223, the update operation 230 is triggered. The update operation 230 involves - after the condition look up stage 240 - the start verification request message 236 being sent, by the attribute catalogue entity or functionality 190, to the subscriber-related portal 10 of the specific subscriber or to the specific subscriber itself. After a confirmation 11 provided by the end user or subscriber via the subscriber-related portal 10, the start verification response message 237 is sent to the attribute catalogue entity or functionality 190 by the subscriber-related portal 10 of the specific subscriber or the specific subscriber itself. The subsequent communication corresponds to the description of Figure 7, i.e. the exchange of information 190', involving a dynamic data exchange 2231 between the attribute catalogue entity or functionality 190 and the access orchestrator entity or functionality 181, as well as a dynamic data exchange 2232 between the attribute catalogue entity or functionality 190 and the element management system entity or functionality 182, and a dynamic configuration 2233 between the element management system entity or functionality 182 and the further access orchestrator entity or functionality 181'. Hence, it is optionally possible according to the present invention to use a separate application or app in order to provide or trigger a change of use confirmation. In connection with the use of the central office point of delivery 110 and its elements or network nodes, there is no need for a separate booking of spontaneous changes of use (flow change). The change in usage is detected by the network (flow intent) and the adjustment is made automatically. The subscriber verification performed by the network allows the service to be clearly assigned. If desired by the user, an automatic, additional authorization can be performed via an app as described. For this purpose, the usage changes are verified at the access element in the attribute catalogue entity or functionality 190. A confirmation request is initiated by the catalog and confirmed in an app (e.g., a self-service app) by a user authorized to do so. Upon receipt of the confirmation, the network-side adjustments are fully executed.

According to the present invention, it is furthermore possible to provide for an optional manufacturer module coupling: If, for example, the test device of a certain manufacturer is switched on, this is detected by the corresponding access module (e.g. the corresponding access node 151). According to the way described above the usage is recognized. Now a manufacturer specific module can be instantiated and used in one or more central office points of delivery.
Furthermore, a secured new-module-type usage is possible: Due to the registration of a friendly-user, it can be decided in the central office point of delivery 110 to instantiate new modules in a secured test environment close to production. In this environment, which is also part of the central office point of delivery 110, functions can be provided that can measure and evaluate the performance of modules. In addition, special protection and control is possible with regard to the behavior of the module. In this way, new types of modules can be tested in an environment that is close to the real environment. If the test is passed, the modules can be released for the active environment without any transition period.
For example, a subscriber might have booked an IP-VPN subscription with three sites A, B, and C. By means of connecting a CPE at site B, the access is initiated. The access element at site B sends a trigger to the product catalog. This results in an update of the configurations with respect to sites A, B, and C, as well as the respective intermediate points required for a connection. Furthermore, by means of connecting a test application at site B, the access node detects the need for testing. Test modules for ports A, B and C are instantiated automatically. Based on the tests, the subscriber can verify the desired connection. Since the access portal booked by the subscriber was also supplied with data in parallel with the connection setup, the customer can obtain a graphical overview of the configuration there. The access is operative as soon as everything has been set up as desired. After a few weeks, the access element at site A detects a data flow demand to site C, which requires a higher bandwidth than the one booked. At the same time, the system detects that the subscriber has purchased a product with permission for short-term overbooking and that it is possible to set up this bandwidth for the subscriber for a certain duration. Using the app optionally used by the subscriber, the subscriber authorizes the "overbooking."
Hence, by means of the present invention, an access event driven construction of a subscriber portfolio catalog (attribute catalogue entity or functionality 190) is possible to be realized as well as a network event driven adjustment of a subscriber portfolio catalog at the central office point of delivery 110. Advantageously, there is a provisioning (by the modules of the central office point of delivery 110) of functions based on the subscriber portfolio catalog (or attribute catalogue entity or functionality 190), a central office point of delivery resource adaptation based on automatic service and dependency discovery, and an automatic, app-driven flow change confirmation.

## Claims

1. Method for operating a broadband access network (120) of a telecommunications network (100), the broadband access network (120) comprising at least one central office point of delivery (110) and the central office point of delivery (110) comprising an access orchestrator entity or functionality (181), at least one element management system entity or functionality (182) and a plurality of access nodes (151, 152, 153) serving or being related to one or a plurality of end users or subscribers of the telecommunications network (100),
wherein the telecommunications network (100) furthermore also comprises a business and/or operations support system (105),
wherein the central office point of delivery (110) additionally comprises or is assigned or related to an attribute catalogue entity or functionality (190), the attribute catalogue entity or functionality (190) realizing an access-related subscription layer or subscriber portfolio catalogue, comprising subscription information regarding the plurality of end users or subscribers, wherein the attribute catalogue entity or functionality (190) comprises subscription information regarding the end users or subscribers that are handled by the respective central office point of delivery (110),
wherein the method comprises the following steps:
-- in a first step, a modification event message (220) is received by the access orchestrator entity or functionality (181), wherein the modification event message (220) reflects a subscriber-related modification, wherein the modification event message (220) is related to a port up event of a specific subscriber of the central office point of delivery (110),
-- in a second step, the access orchestrator entity or functionality (181) contacts the attribute catalogue entity or functionality (190) resulting in an update operation (230) of the attribute catalogue entity or functionality (190) adapted to the subscriber-related modification, wherein a look-up-trigger message (221) is sent, by the access orchestrator entity or functionality (181), to the attribute catalogue entity or functionality (190), wherein the look-up-trigger message (221) comprises a secret or encrypted information, wherein subsequent to the look-up-trigger message (221), the update operation (230) involves an exchange of data with the element management system entity or functionality (182) and the business and/or operations support system (105), wherein the access orchestrator entity or functionality (181) transmits a portal message (231) comprising the secret or encrypted information to a subscriber-related portal (10), and the attribute catalogue entity or functionality (190) transmits a further portal message (232) comprising the secret or encrypted information to the subscriber-related portal (10), wherein, after matching the secret or encrypted information comprised by the portal message (231) and the secret or encrypted information comprised by the further portal message (232), a customer-related record is automatically created in the subscriber-related portal (10), and the next time the subscriber-related portal (10) is called up by a customer, updated data is displayed.

2. Method according to claim 1, wherein the access orchestrator entity or functionality (181) or the attribute catalogue entity or functionality (190) check the modification event message (220) in real-time with respect to:
-- local data or current data regarding the central office point of delivery (110) or regarding other users of the central office point of delivery (110),
-- subscriber-related data, retrieved from the business and/or operations support system (105) or retrieved from the element management system entity or functionality (182),
wherein the telecommunications network (100) comprises - besides the central office point of delivery (110) - at least one further central office point of delivery (110'), the further central office point of delivery (110') comprising a further access orchestrator entity or functionality (181').

3. Method according to one of the preceding claims, wherein a first further modification event message (220) is received by the access orchestrator entity or functionality (181), wherein the first further modification event message (220) is related to an individual subscriber-related portfolio update event of a specific subscriber of the central office point of delivery (110), wherein - as part of the second step - a secondary modification event message (222) is sent, by the access orchestrator entity or functionality (181), to the attribute catalogue entity or functionality (190), wherein subsequent to the secondary modification event message (222), the update operation (230) involves an exchange of data with the element management system entity or functionality (182) and/or the business and/or operations support system (105) and/or the further access orchestrator entity or functionality (181').

4. Method according to one of the preceding claims, wherein a second further modification event message (220) is received by the access orchestrator entity or functionality (181), wherein the second further modification event message (220) is related to an individual subscriber-related portfolio update event of a specific subscriber of the central office point of delivery (110), wherein - as part of the second step and in view of a special traffic flow being provided to the specific subscriber - a special flow start message (223) is sent, by the access orchestrator entity or functionality (181), to the attribute catalogue entity or functionality (190), wherein subsequent to the special flow start message (223), the update operation (230) involves an exchange of data with the element management system entity or functionality (182) and/or the business and/or operations support system (105) and/or the further access orchestrator entity or functionality (181'),
wherein the update operation (230) furthermore involves allowing at least one out of the initiation of the special traffic flow and the completion of the specific traffic flow, especially by means of the access orchestrator entity or functionality (181) transmitting a special flow confirmation message (233) to a subscriber-related portal (10) of the specific subscriber or to the specific subscriber itself and/or by means of the access orchestrator entity or functionality (181) receiving a special flow stop message (235) from a subscriber-related portal (10) of the specific subscriber or from the specific subscriber itself,
wherein especially the update operation (230) involves an update operation (234) between the business and/or operations support system (105) and the attribute catalogue entity or functionality (190).

5. Method according to one of the preceding claims, wherein an access element detects the need for special treatment due to special usage, especially due to connecting a special application, wherein a third further modification event message (220) is received by the access orchestrator entity or functionality (181), wherein the third further modification event message (220) is related to an individual subscriber-related portfolio update event of a specific subscriber of the central office point of delivery (110), wherein - as part of the second step - an extra service message (223) is sent, by the access orchestrator entity or functionality (181), to the attribute catalogue entity or functionality (190), wherein subsequent to the extra service message (223), an exchange of data with the element management system entity or functionality (182) and/or the business and/or operations support system (105) and/or the further access orchestrator entity or functionality (181') is performed,
wherein the update operation (230) furthermore involves allowing at least one out of the initiation of the extra service and the completion of the extra service, especially by means of the access orchestrator entity or functionality (181) transmitting an extra service confirmation message (233) to the subscriber-related portal (10) of the specific subscriber or to the specific subscriber itself and/or by means of the access orchestrator entity or functionality (181) receiving an extra service stop message (235) from a subscriber-related portal (10) of the specific subscriber or from the specific subscriber itself
wherein especially the update operation (230) involves an update operation (234) between the business and/or operations support system (105) and the attribute catalogue entity or functionality (190).

6. Method according to one of the preceding claims, wherein - as part of the second step and prior to either the special flow confirmation message (233) or the extra service confirmation message (233) being sent by the access orchestrator entity or functionality (181) to the subscriber-related portal (10) of the specific subscriber or to the specific subscriber itself - a start verification request message (236) is sent, by the attribute catalogue entity or functionality (190), to the subscriber-related portal (10) of the specific subscriber or to the specific subscriber itself, and a start verification response message (237) is sent to the attribute catalogue entity or functionality (190) by the subscriber-related portal (10) of the specific subscriber or the specific subscriber itself, wherein the start verification request message (236) and the start verification response message (237) is related to the start of either the special flow or the extra service.

7. Method according to one of the preceding claims, wherein the central office point of delivery (110) comprises a switching fabric (115), the switching fabric (115) comprising a plurality of spine network nodes (171, 172) and a plurality of leaf network nodes (161, 162).

8. Broadband access network (120) or telecommunications network (100) comprising a broadband access network (120), the broadband access network (120) comprising at least one central office point of delivery (110) and the central office point of delivery (110) comprising an access orchestrator entity or functionality (181), at least one element management system entity or functionality (182) and a plurality of access nodes (151, 152, 153) serving or being related to one or a plurality of end users or subscribers of the telecommunications network (100),
wherein the telecommunications network (100) furthermore also comprises a business and/or operations support system (105),
wherein the central office point of delivery (110) additionally comprises or is assigned or related to an attribute catalogue entity or functionality (190), the attribute catalogue entity or functionality (190) realizing an access-related subscription layer or subscriber portfolio catalogue, comprising subscription information regarding the plurality of end users or subscribers, wherein the attribute catalogue entity or functionality (190) comprises subscription information regarding the end users or subscribers that are handled by the respective central office point of delivery (110),
wherein the broadband access network (120) or the telecommunications network (100) is configured such that:
-- a modification event message (220) is received by the access orchestrator entity or functionality (181), wherein the modification event message (220) reflects a subscriber-related modification, wherein the modification event message (220) is related to a port up event of a specific subscriber of the central office point of delivery (110),
-- the access orchestrator entity or functionality (181) contacts the attribute catalogue entity or functionality (190) resulting in an update operation (230) of the attribute catalogue entity or functionality (190) adapted to the subscriber-related modification, wherein a look-up-trigger message (221) is sent, by the access orchestrator entity or functionality (181), to the attribute catalogue entity or functionality (190), wherein the look-up-trigger message (221) comprises a secret or encrypted information, wherein subsequent to the look-up-trigger message (221), the update operation (230) involves an exchange of data with the element management system entity or functionality (182) and the business and/or operations support system (105), wherein the access orchestrator entity or functionality (181) transmits a portal message (231) comprising the secret or encrypted information to a subscriber-related portal (10), and the attribute catalogue entity or functionality (190) transmits a further portal message (232) comprising the secret or encrypted information to the subscriber-related portal (10), wherein, after matching the secret or encrypted information comprised by the portal message (231) and the secret or encrypted information comprised by the further portal message (232), a customer-related record is automatically created in the subscriber-related portal (10), and the next time the subscriber-related portal (10) is called up by a customer, updated data is displayed.

9. Attribute catalogue entity or functionality (190) or central office point of delivery (110) comprising an attribute catalogue entity or functionality (190) provided to be used part of a broadband access network (120) or telecommunications network (100) according to claim 8,
the attribute catalogue entity or functionality (190) realizing an access-related subscription layer or subscriber portfolio catalogue, comprising subscription information regarding the plurality of end users or subscribers,
wherein the attribute catalogue entity or functionality (190) comprises subscription information regarding the end users or subscribers that are handled by the respective central office point of delivery (110),
wherein the attribute catalogue entity or functionality (190) is configured such that:
-- the attribute catalogue entity or functionality (190) is contacted by the access orchestrator entity or functionality (181) resulting in an update operation (230) of the attribute catalogue entity or functionality (190) adapted to the subscriber-related modification.

10. Program comprising a computer readable program code which, when executed on network nodes of a telecommunications network (100), causes the network nodes of the telecommunications network (100) to perform a method according one of claims 1 to 7.

11. Computer-readable medium comprising instructions which when executed on network nodes of a telecommunications network (100), causes the network nodes of the telecommunications network (100) to perform a method according one of claims 1 to 7.

## Patentansprüche

1. Verfahren zum Betreiben eines Breitbandzugangsnetzes (120) eines Telekommunikationsnetzes (100), wobei das Breitbandzugangsnetz (120) mindestens einen Vermittlungsamt-Übergabepunkt (110) umfasst und der Vermittlungsamt-Übergabepunkt (110) eine Zugangsorchestrator-Entität oder -Funktionalität (181), mindestens eine Elementmanagementsystem-Entität oder -Funktionalität (182) und mehrere Zugangsknoten (151, 152, 153), die einen oder mehrere Endnutzer oder Teilnehmer des Telekommunikationsnetzes (100) bedienen oder mit ihnen in Beziehung stehen, umfasst,
wobei das Telekommunikationsnetz (100) darüber hinaus auch ein Geschäfts- und/oder Betriebsunterstützungssystem (105) umfasst,
wobei der Vermittlungsamt-Übergabepunkt (110) zusätzlich eine Attributkatalog-Entität oder -Funktionalität (190) umfasst oder dieser zugewiesen ist oder mit ihr in Beziehung steht, wobei die Attributkatalog-Entität oder -Funktionalität (190) eine zugangsbezogene Teilnahmeschicht oder einen zugangsbezogenen Teilnehmerportfoliokatalog realisiert, die bzw. der Teilnahme-Informationen in Bezug auf die mehreren Endnutzer oder Teilnehmer umfasst, wobei die Attributkatalog-Entität oder -Funktionalität (190) Teilnahme-Informationen in Bezug auf die Endnutzer oder Teilnehmer umfasst, die durch den jeweiligen Vermittlungsamt-Übergabepunkt (110) gehandhabt werden,
wobei das Verfahren die folgenden Schritte umfasst:
- in einem ersten Schritt wird eine Modifikationsereignisnachricht (220) durch die Zugangsorchestrator-Entität oder -Funktionalität (181) empfangen, wobei die Modifikationsereignisnachricht (220) eine teilnehmerbezogene Modifikation widerspiegelt, wobei die Modifikationsereignisnachricht (220) mit einem Port-Up-Ereignis eines spezifischen Teilnehmers des Vermittlungsamt-Übergabepunkts (110) in Beziehung steht,
- in einem zweiten Schritt kontaktiert die Zugangsorchestrator-Entität oder -Funktionalität (181) die Attributkatalog-Entität oder -Funktionalität (190), was zu einer Aktualisierungsoperation (230) der Attributkatalog-Entität oder -Funktionalität (190) führt, die an die teilnehmerbezogene Modifikation angepasst ist, wobei eine Nachschlageauslösernachricht (221) durch die Zugangsorchestrator-Entität oder -Funktionalität (181) an die Attributkatalog-Entität oder -Funktionalität (190) gesendet wird, wobei die Nachschlageauslösernachricht (221) eine geheime oder verschlüsselte Information umfasst, wobei im Anschluss an die Nachschlageauslösernachricht (221) die Aktualisierungsoperation (230) einen Austausch von Daten mit der Elementmanagementsystem-Entität oder -Funktionalität (182) und dem Geschäfts- und/oder Betriebsunterstützungssystem (105) umfasst, wobei die Zugangsorchestrator-Entität oder -Funktionalität (181) eine Portalnachricht (231), die die geheimen oder verschlüsselten Informationen umfasst, an ein teilnehmerbezogenes Portal (10) sendet und die Attributkatalog-Entität oder -Funktionalität (190) eine weitere Portalnachricht (232), die die geheimen oder verschlüsselten Informationen umfasst, an das teilnehmerbezogene Portal (10) sendet, wobei, nach einem Abgleich der geheimen oder verschlüsselten Informationen, die in der Portalnachricht (231) enthalten sind, und der geheimen oder verschlüsselten Informationen, die in der weiteren Portalnachricht (232) enthalten sind, automatisch ein kundenbezogener Datensatz in dem teilnehmerbezogenen Portal (10) erzeugt wird und das nächste Mal, wenn das teilnehmerbezogene Portal (10) durch einen Kunden aufgerufen wird, aktualisierte Daten angezeigt werden.

2. Verfahren nach Anspruch 1, wobei die Zugangsorchestrator-Entität oder -Funktionalität (181) oder die Attributkatalog-Entität oder -Funktionalität (190) die Modifikationsereignisnachricht (220) in Echtzeit überprüft auf:
- lokale Daten oder aktuelle Daten in Bezug auf den Vermittlungsamt-Übergabepunkt (110) oder in Bezug auf andere Nutzer des Vermittlungsamt-Übergabepunktes (110),
- teilnehmerbezogene Daten, die aus dem Geschäfts- und/oder Betriebsunterstützungssystem (105) abgerufen wurden oder aus der Elementmanagementsystem-Entität oder -Funktionalität (182) abgerufen werden,
wobei das Telekommunikationsnetz (100) - neben dem Vermittlungsamt-Übergabepunkt (110) - mindestens einen weiteren Vermittlungsamt-Übergabepunkt (110') umfasst, wobei der weitere Vermittlungsamt-Übergabepunkt (110') eine weitere Zugangsorchestrator-Entität oder -Funktionalität (181') umfasst.

3. Verfahren nach einem der vorangehenden Ansprüche, wobei eine erste weitere Modifikationsereignisnachricht (220) durch die Zugangsorchestrator-Entität oder -Funktionalität (181) empfangen wird, wobei sich die erste weitere Modifikationsereignisnachricht (220) auf ein individuelles teilnehmerbezogenes Portfolioaktualisierungsereignis eines spezifischen Teilnehmers des Vermittlungsamt-Übergabepunkts (110) bezieht, wobei - als Teil des zweiten Schrittes - eine sekundäre Modifikationsereignisnachricht (222) durch die Zugangsorchestrator-Entität oder -Funktionalität (181) an die Attributkatalog-Entität oder -Funktionalität (190) gesendet wird, wobei im Anschluss an die sekundäre Modifikationsereignisnachricht (222) die Aktualisierungsoperation (230) einen Datenaustausch mit der Elementmanagementsystem-Entität oder -Funktionalität (182) und/oder dem Geschäfts- und/oder Betriebsunterstützungssystem (105) und/oder der weiteren Zugangsorchestrator-Entität oder -Funktionalität (181') umfasst.

4. Verfahren nach einem der vorangehenden Ansprüche, wobei eine zweite weitere Modifikationsereignisnachricht (220) durch die Zugangsorchestrator-Entität oder -Funktionalität (181) empfangen wird, wobei sich die zweite weitere Modifikationsereignisnachricht (220) auf ein individuelles teilnehmerbezogenes Portfolioaktualisierungsereignis eines spezifischen Teilnehmers des Vermittlungsamt-Übergabepunkts (110) bezieht, wobei - als Teil des zweiten Schrittes und im Hinblick auf einen speziellen Verkehrsfluss, der dem spezifischen Teilnehmer bereitgestellt wird - eine spezielle Flussstart-Nachricht (223) durch die Zugangsorchestrator-Entität oder -Funktionalität (181) an die Attributkatalog-Entität oder -Funktionalität (190) gesendet wird, wobei im Anschluss an die spezielle Flussstartnachricht (223) die Aktualisierungsoperation (230) einen Datenaustausch mit der Elementmanagementsystem-Entität oder -Funktionalität (182) und/oder dem Geschäfts- und/oder Betriebsunterstützungssystem (105) und/oder der weiteren Zugangsorganisations-Entität oder -Funktionalität (181') umfasst,
wobei die Aktualisierungsoperation (230) darüber hinaus das Erlauben mindestens eines von der Initiierung des speziellen Verkehrsflusses und der Vollendung des speziellen Verkehrsflusses umfasst, insbesondere das Senden, mittels der Zugangsorchestrator-Entität oder -Funktionalität (181), einer speziellen Flussbestätigungsnachricht (233) an ein teilnehmerbezogenes Portal (10) des speziellen Teilnehmers oder an den speziellen Teilnehmer selbst und/oder das Empfangen, mittels der Zugangsorchestrator-Entität oder -Funktionalität (181), einer speziellen Flussstoppnachricht (235) von einem teilnehmerbezogenen Portal (10) des speziellen Teilnehmers oder von dem speziellen Teilnehmer selbst,
wobei insbesondere die Aktualisierungsoperation (230) eine Aktualisierungsoperation (234) zwischen dem Geschäfts- und/oder Betriebsunterstützungssystem (105) und der Attributkatalog-Entität oder -Funktionalität (190) umfasst.

5. Verfahren nach einem der vorangehenden Ansprüche, wobei ein Zugangselement die Notwendigkeit einer Sonderbehandlung aufgrund einer speziellen Nutzung, insbesondere aufgrund des Verbindens einer speziellen Anwendung, detektiert, wobei eine dritte weitere Modifikationsereignisnachricht (220) durch die Zugangsorchestrator-Entität oder -Funktionalität (181) empfangen wird, wobei sich die dritte weitere Modifikationsereignisnachricht (220) auf ein individuelles teilnehmerbezogenes Portfolioaktualisierungsereignis eines spezifischen Teilnehmers des Vermittlungsamt-Übergabepunkts (110) bezieht, wobei - als Teil des zweiten Schrittes - eine Zusatzdienstnachricht (223) durch die Zugangsorchestrator-Entität oder -Funktionalität (181) an die Attributkatalog-Entität oder -Funktionalität (190) gesendet wird, wobei im Anschluss an die Zusatzdienstnachricht (223) ein Datenaustausch mit der Elementmanagementsystem-Entität oder -Funktionalität (182) und/oder dem Geschäfts- und/oder Betriebsunterstützungssystem (105) und/oder der weiteren Zugangsorchestrator-Entität oder -Funktionalität (181') durchgeführt wird,
wobei die Aktualisierungsoperation (230) darüber hinaus das Erlauben mindestens eines von der Initiierung des Zusatzdienstes und des Vollendens des Zusatzdienstes umfasst, insbesondere das Senden, mittels der Zugangsorchestrator-Entität oder -Funktionalität (181), einer Zusatzdienstbestätigungsnachricht (233) an das teilnehmerbezogene Portal (10) des spezifischen Teilnehmers oder an den spezifischen Teilnehmer selbst und/oder das Empfangen, mittels der Zugangsorchestrator-Entität oder -Funktionalität (181), einer Zusatzdienststoppnachricht (235) von einem teilnehmerbezogenen Portal (10) des spezifischen Teilnehmers oder von dem spezifischen Teilnehmer selbst, wobei insbesondere die Aktualisierungsoperation (230) eine Aktualisierungsoperation (234) zwischen dem Geschäfts- und/oder Betriebsunterstützungssystem (105) und der Attributkatalog-Entität oder -Funktionalität (190) umfasst.

6. Verfahren nach einem der vorangehenden Ansprüche, wobei - als Teil des zweiten Schrittes und bevor entweder die spezielle Flussbestätigungsnachricht (233) oder die Zusatzdienstbestätigungsnachricht (233) durch die Zugangsorchestrator-Entität oder -Funktionalität (181) an das teilnehmerbezogene Portal (10) des spezifischen Teilnehmers oder an den spezifischen Teilnehmer selbst gesendet wird - eine Startverifizierungsanforderungsnachricht (236) durch die Attributkatalog-Entität oder -Funktionalität (190) an das teilnehmerbezogene Portal (10) des spezifischen Teilnehmers oder an den spezifischen Teilnehmer selbst gesendet wird und eine Startverifizierungsantwortnachricht (237) durch das teilnehmerbezogene Portal (10) des spezifischen Teilnehmers oder den spezifischen Teilnehmer selbst an die Attributkatalog-Entität oder -Funktionalität (190) gesendet wird, wobei sich die Startverifizierungsanforderungsnachricht (236) und die Startverifizierungsantwortnachricht (237) auf den Start entweder des speziellen Flusses oder des Zusatzdienstes beziehen.

7. Verfahren nach einem der vorangehenden Ansprüche, wobei der Vermittlungsamt-Übergabepunkt (110) ein Switching-Fabric (115) umfasst, wobei das Switching-Fabric (115) mehrere Spine-Netzknoten (171, 172) und mehrere Leaf-Netzknoten (161, 162) umfasst.

8. Breitbandzugangsnetz (120) oder Telekommunikationsnetz (100), umfassend ein Breitbandzugangsnetz (120), wobei das Breitbandzugangsnetz (120) mindestens einen Vermittlungsamt-Übergabepunkt (110) umfasst und der Vermittlungsamt-Übergabepunkt (110) eine Zugangsorchestrator-Entität oder -Funktionalität (181), mindestens eine Elementmanagementsystem-Entität oder -Funktionalität (182) und mehrere Zugangsknoten (151, 152, 153), die einen oder mehrere Endnutzer oder Teilnehmer des Telekommunikationsnetzes (100) bedienen oder mit ihnen in Beziehung stehen, umfasst,
wobei das Telekommunikationsnetz (100) darüber hinaus auch ein Geschäfts- und/oder Betriebsunterstützungssystem (105) umfasst,
wobei der Vermittlungsamt-Übergabepunkt (110) zusätzlich eine Attributkatalog-Entität oder -Funktionalität (190) umfasst oder dieser zugewiesen ist oder mit ihr in Beziehung steht, wobei die Attributkatalog-Entität oder -Funktionalität (190) eine zugangsbezogene Teilnahmeschicht oder einen zugangsbezogenen Teilnehmerportfoliokatalog realisiert, die bzw. der Teilnahme-Informationen in Bezug auf die mehreren Endnutzer oder Teilnehmer umfasst, wobei die Attributkatalog-Entität oder -Funktionalität (190) Teilnahme-Informationen in Bezug auf die Endnutzer oder Teilnehmer umfasst, die durch den jeweiligen Vermittlungsamt-Übergabepunkt (110) gehandhabt werden,
wobei das Breitband-Zugangsnetz (120) oder das Telekommunikationsnetz (100) so konfiguriert sind, dass:
- eine Modifikationsereignisnachricht (220) durch die Zugangsorchestrator-Entität oder -Funktionalität (181) empfangen wird, wobei die Modifikationsereignisnachricht (220) eine teilnehmerbezogene Modifikation widerspiegelt, wobei die Modifikationsereignisnachricht (220) mit einem Port-Up-Ereignis eines spezifischen Teilnehmers des Vermittlungsamt-Übergabepunkts (110) in Beziehung steht,
- die Zugangsorchestrator-Entität oder -Funktionalität (181) die Attributkatalog-Entität oder -Funktionalität (190) kontaktiert, was zu einer Aktualisierungsoperation (230) der Attributkatalog-Entität oder -Funktionalität (190) führt, die an die teilnehmerbezogene Modifikation angepasst ist, wobei eine Nachschlageauslösernachricht (221) durch die Zugangsorchestrator-Entität oder -Funktionalität (181) an die Attributkatalog-Entität oder -Funktionalität (190) gesendet wird, wobei die Nachschlageauslösernachricht (221) eine geheime oder verschlüsselte Information umfasst, wobei im Anschluss an die Nachschlageauslösernachricht (221) die Aktualisierungsoperation (230) einen Austausch von Daten mit der Elementmanagementsystem-Entität oder -Funktionalität (182) und dem Geschäfts- und/oder Betriebsunterstützungssystem (105) umfasst, wobei die Zugangsorchestrator-Entität oder -Funktionalität (181) eine Portalnachricht (231), die die geheimen oder verschlüsselten Informationen umfasst, an ein teilnehmerbezogenes Portal (10) sendet und die Attributkatalog-Entität oder -Funktionalität (190) eine weitere Portalnachricht (232), die die geheimen oder verschlüsselten Informationen umfasst, an das teilnehmerbezogene Portal (10) sendet, wobei, nach einem Abgleich der geheimen oder verschlüsselten Informationen, die in der Portalnachricht (231) enthalten sind, und der geheimen oder verschlüsselten Informationen, die in der weiteren Portalnachricht (232) enthalten sind, automatisch ein kundenbezogener Datensatz in dem teilnehmerbezogenen Portal (10) erzeugt wird und das nächste Mal, wenn das teilnehmerbezogene Portal (10) durch einen Kunden aufgerufen wird, aktualisierte Daten angezeigt werden.

9. Attributkatalog-Entität oder -Funktionalität (190) oder Vermittlungsamt-Übergabepunkt (110), der eine Attributkatalog-Entität oder -Funktionalität (190) umfasst, die dafür bereitgestellt ist, als Teil eines Breitbandzugangsnetzes (120) oder Telekommunikationsnetzes (100) gemäß Anspruch 8 verwendet zu werden,
wobei die Attributkatalog-Entität oder -Funktionalität (190) eine zugangsbezogene Teilnahmeschicht oder einen zugangsbezogenen Teilnehmerportfoliokatalog realisiert, die bzw. der Teilnahme-Informationen in Bezug auf die mehreren Endnutzer oder Teilnehmer umfasst,
wobei die Attributkatalog-Entität oder -Funktionalität (190) Teilnahme-Informationen in Bezug auf die Endnutzer oder Teilnehmer umfasst, die durch den jeweiligen Vermittlungsamt-Übergabepunkt (110) gehandhabt werden, wobei die Attributkatalog-Entität oder -Funktionalität (190) so konfiguriert ist, dass:
- die Attributkatalog-Entität oder -Funktionalität (190) durch die Zugangsorchestrator-Entität oder -Funktionalität (181) kontaktiert wird, was zu einer Aktualisierungsoperation (230) der Attributkatalog-Entität oder -Funktionalität (190) führt, die an die teilnehmerbezogene Modifikation angepasst ist.

10. Programm, umfassend einen computerlesbaren Programmcode, der, wenn er in Netzknoten eines Telekommunikationsnetzes (100) ausgeführt wird, die Netzknoten des Telekommunikationsnetzes (100) veranlasst, ein Verfahren nach einem der Ansprüche 1 bis 7 durchzuführen.

11. Computerlesbares Medium, umfassend Instruktionen, die, wenn sie in Netzknoten eines Telekommunikationsnetzes (100) ausgeführt werden, die Netzknoten des Telekommunikationsnetzes (100) veranlassen, ein Verfahren nach einem der Ansprüche 1 bis 7 durchzuführen.

## Revendications

1. Procédé de fonctionnement d'un réseau d'accès à large bande (120) d'un réseau de télécommunications (100), le réseau d'accès à large bande (120) comprenant au moins un point de distribution de central téléphonique (110) et le point de distribution de central téléphonique (110) comprenant une entité ou fonctionnalité d'orchestrateur d'accès (181), au moins une entité ou fonctionnalité de système de gestion d'éléments (182) et une pluralité de nœuds d'accès (151, 152, 153) servant ou étant liés à un ou une pluralité d'utilisateurs finaux ou d'abonnés du réseau de télécommunications (100),
dans lequel le réseau de télécommunications (100) comprend en outre également un système de support commercial et/ou opérationnel (105),
dans lequel le point de distribution de central téléphonique (110) en outre comprend ou est affecté ou lié à une entité ou fonctionnalité de catalogue d'attributs (190), l'entité ou fonctionnalité de catalogue d'attributs (190) réalisant une couche d'abonnement liée à l'accès ou un catalogue de portefeuille d'abonnés, comprenant des informations d'abonnement concernant la pluralité d'utilisateurs finaux ou d'abonnés, dans lequel l'entité ou fonctionnalité de catalogue d'attributs (190) comprend des informations d'abonnement concernant les utilisateurs finaux ou les abonnés qui sont gérés par le point de distribution de central téléphonique respectif (110),
dans lequel le procédé comprend les étapes suivantes :
- dans une première étape, un message d'événement de modification (220) est reçu par l'entité ou fonctionnalité d'orchestrateur d'accès (181), dans lequel le message d'événement de modification (220) reflète une modification liée à l'abonné, dans lequel le message d'événement de modification (220) est lié à un événement de démarrage de port d'un abonné spécifique du point de distribution de central téléphonique (110),
- dans une seconde étape, l'entité ou fonctionnalité d'orchestrateur d'accès (181) contacte l'entité ou fonctionnalité de catalogue d'attributs (190) entraînant une opération de mise à jour (230) de l'entité ou fonctionnalité de catalogue d'attributs (190) adaptée à la modification liée à l'abonné, dans lequel un message déclencheur de recherche (221) est envoyé, par l'entité ou fonctionnalité d'orchestrateur d'accès (181), à l'entité ou fonctionnalité de catalogue d'attributs (190), dans lequel le message déclencheur de recherche (221) comprend des informations secrètes ou chiffrées, dans lequel, à la suite du message déclencheur de recherche (221), l'opération de mise à jour (230) implique un échange de données avec l'entité ou fonctionnalité de système de gestion d'éléments (182) et le système de support commercial et/ou opérationnel (105), dans lequel l'entité ou fonctionnalité d'orchestrateur d'accès (181) transmet un message de portail (231) comprenant les informations secrètes ou chiffrées à un portail lié à l'abonné (10), dans lequel et l'entité ou fonctionnalité de catalogue d'attributs (190) transmet un autre message de portail (232) comprenant les informations secrètes ou chiffrées au portail lié à l'abonné (10), dans lequel, après la mise en correspondance des informations secrètes ou chiffrées comprises par le message de portail (231) et les informations secrètes ou chiffrées comprises par l'autre message de portail (232), un enregistrement lié au client est automatiquement créé dans le portail lié à l'abonné (10), et la prochaine fois que le portail lié à l'abonné (10) est appelé par un client, des données mises à jour seront affichées.

2. Procédé selon la revendication 1, dans lequel l'entité ou fonctionnalité d'orchestrateur d'accès (181) ou l'entité ou fonctionnalité de catalogue d'attributs (190) vérifie le message d'événement de modification (220) en temps réel par rapport à :
- des données locales ou des données actuelles concernant le point de distribution de central téléphonique (110) ou concernant d'autres utilisateurs du point de distribution de central téléphonique (110),
- des données liées à l'abonné, extraites du système de support commercial et/ou opérationnel (105) ou extraites de l'entité ou fonctionnalité de système de gestion d'éléments (182),
dans lequel le réseau de télécommunications (100) comprend - outre le point de distribution de central téléphonique (110) - au moins un autre point de distribution de central téléphonique (110'), l'autre point de distribution de central téléphonique (110') comprenant une autre entité ou fonctionnalité d'orchestrateur d'accès (181').

3. Procédé selon l'une des revendications précédentes, dans lequel un premier autre message d'événement de modification (220) est reçu par l'entité ou fonctionnalité d'orchestrateur d'accès (181), dans lequel le premier autre message d'événement de modification (220) est lié à un événement de mise à jour de portefeuille lié à un abonné individuel d'un point de distribution de central téléphonique (110), dans lequel - dans le cadre de la seconde étape - un message d'événement de modification secondaire (222) est envoyé, par l'entité ou fonctionnalité d'orchestrateur d'accès (181), à l'entité ou fonctionnalité de catalogue d'attributs (190), dans lequel, à la suite au message d'événement de modification secondaire (222), l'opération de mise à jour (230) implique un échange de données avec l'entité ou fonctionnalité de système de gestion d'éléments (182) et/ou le système de support commercial et/ou opérationnel (105) et/ou l'autre entité ou fonctionnalité d'orchestrateur d'accès (181').

4. Procédé selon l'une des revendications précédentes, dans lequel un deuxième autre message d'événement de modification (220) est reçu par l'entité ou fonctionnalité d'orchestrateur d'accès (181), dans lequel le deuxième autre message d'événement de modification (220) est lié à un événement de mise à jour de portefeuille lié à un abonné individuel du point de distribution de central téléphonique (110), dans lequel - dans le cadre de la seconde étape et en vue d'un flux de trafic spécial qui est fourni à l'abonné spécifique - un message de démarrage de flux spécial (223) est envoyé, par l'entité ou fonctionnalité d'orchestrateur d'accès (181), à l'entité ou fonctionnalité de catalogue d'attributs (190),
dans lequel, à la suite du message de démarrage de flux spécial (223), l'opération de mise à jour (230) implique un échange de données avec l'entité ou fonctionnalité de système de gestion d'éléments (182) et/ou le système de support commercial et/ou opérationnel (105) et/ou l'autre entité ou fonctionnalité d'orchestrateur d'accès (181'), dans lequel l'opération de mise à jour (230) implique en outre d'autoriser au moins l'un parmi l'initiation du flux de trafic spécial et l'achèvement du flux de trafic spécifique, notamment au moyen de l'entité ou fonctionnalité d'orchestrateur d'accès (181) transmettant un message de confirmation de flux spécial (233) à un portail lié à l'abonné (10) de l'abonné spécifique ou à l'abonné spécifique lui-même et/ou au moyen de l'entité ou fonctionnalité d'orchestrateur d'accès (181) recevant un message d'arrêt de flux spécial (235) à partir d'un portail lié à l'abonné (10) de l'abonné spécifique ou à partir de l'abonné spécifique lui-même,
dans lequel en particulier, l'opération de mise à jour (230) implique une opération de mise à jour (234) entre le système de support commercial et/ou opérationnel (105) et l'entité ou fonctionnalité de catalogue d'attributs (190).

5. Procédé selon l'une des revendications précédentes, dans lequel un élément d'accès détecte la nécessité d'un traitement spécial en raison d'une utilisation particulière, notamment en raison de la connexion d'une application spéciale, dans lequel un troisième autre message d'événement de modification (220) est reçu par l'entité ou fonctionnalité d'orchestrateur d'accès (181), dans lequel le troisième autre message d'événement de modification (220) est lié à un événement de mise à jour de portefeuille lié à un abonné individuel d'un abonné spécifique du point de distribution de central téléphonique (110), dans lequel - dans le cadre de la seconde étape - un message de service supplémentaire (223) est envoyé, par l'entité ou fonctionnalité d'orchestrateur d'accès (181), à l'entité ou fonctionnalité de catalogue d'attributs (190), dans lequel, à la suite du message de service supplémentaire (223), un échange de données avec l'entité ou fonctionnalité de système de gestion d'éléments (182) et/ou le système de support commercial et/ou opérationnel (105) et/ou l'entité ou fonctionnalité d'orchestrateur d'accès supplémentaire (181') est effectué,
dans lequel l'opération de mise à jour (230) implique en outre d'autoriser au moins l'un parmi l'initiation du service supplémentaire et l'achèvement du service supplémentaire, notamment au moyen de l'entité ou fonctionnalité d'orchestrateur d'accès (181) transmettant un message de confirmation de service supplémentaire (233) au portail lié à l'abonné (10) de l'abonné spécifique ou à l'abonné spécifique lui-même et/ou au moyen de l'entité ou fonctionnalité d'orchestrateur d'accès (181) recevant un message d'arrêt de service supplémentaire (235) à partir d'un portail lié à l'abonné (10) de l'abonné spécifique ou à partir de l'abonné spécifique lui-même
en particulier, l'opération de mise à jour (230) implique une opération de mise à jour (234) entre le système de support commercial et/ou opérationnel (105) et l'entité ou la fonctionnalité de catalogue d'attributs (190).

6. Procédé selon l'une des revendications précédentes, dans lequel - dans le cadre de la seconde étape et préalablement à l'envoi soit du message de confirmation de flux spécial (233), soit du message de confirmation de service supplémentaire (233) par l'entité ou fonctionnalité d'orchestrateur d'accès (181) au portail lié à l'abonné (10) de l'abonné spécifique ou à l'abonné spécifique lui-même - un message de demande de vérification de démarrage (236) est envoyé, par l'entité ou fonctionnalité de catalogue d'attributs (190), au portail lié à l'abonné (10) de l'abonné spécifique ou à l'abonné spécifique lui-même, et un message de réponse de vérification de démarrage (237) est envoyé à l'entité ou fonctionnalité de catalogue d'attributs (190) par le portail lié à l'abonné (10) de l'abonné spécifique ou l'abonné spécifique lui-même, dans lequel le message de demande de vérification de démarrage (236) et le message de réponse de vérification de démarrage (237) sont liés au démarrage soit du flux spécial, soit du service supplémentaire.

7. Procédé selon l'une des revendications précédentes, dans lequel le point de distribution de central téléphonique (110) comprend une structure de commutation (115), la structure de commutation (115) comprenant une pluralité de noeuds de réseau troncs (171, 172) et une pluralité de noeuds de réseau feuilles (161, 162).

8. Réseau d'accès à large bande (120) ou réseau de télécommunications (100) comprenant un réseau d'accès à large bande (120), le réseau d'accès à large bande (120) comprenant au moins un point de distribution de central téléphonique (110) et le point de distribution de central téléphonique (110) comprenant une entité ou fonctionnalité d'orchestrateur d'accès (181), au moins une entité ou fonctionnalité de système de gestion d'éléments (182) et une pluralité de noeuds d'accès (151, 152, 153) servant ou étant liés à un ou une pluralité d'utilisateurs finaux ou d'abonnés du réseau de télécommunications (100),
dans lequel le réseau de télécommunications (100) comprend en outre également un système de support commercial et/ou opérationnel (105),
dans lequel le point de distribution de central téléphonique (110) en outre comprend ou est affecté ou lié à une entité ou fonctionnalité de catalogue d'attributs (190), l'entité ou fonctionnalité de catalogue d'attributs (190) réalisant une couche d'abonnement liée à l'accès ou un catalogue de portefeuille d'abonnés, comprenant des informations d'abonnement concernant la pluralité d'utilisateurs finaux ou d'abonnés, dans lequel l'entité ou fonctionnalité de catalogue d'attributs (190) comprend des informations d'abonnement concernant les utilisateurs finaux ou les abonnés qui sont gérés par le point de distribution de central téléphonique respectif (110),
dans lequel le réseau d'accès à large bande (120) ou le réseau de télécommunications (100) est configuré de telle sorte que :
- un message d'événement de modification (220) est reçu par l'entité ou fonctionnalité d'orchestrateur d'accès (181), dans lequel le message d'événement de modification (220) reflète une modification liée à l'abonné, dans lequel le message d'événement de modification (220) est lié à un événement de démarrage de port d'un abonné spécifique du point de distribution de central téléphonique (110),
- l'entité ou fonctionnalité d'orchestrateur d'accès (181) contacte l'entité ou fonctionnalité de catalogue d'attributs (190) entraînant une opération de mise à jour (230) de l'entité ou fonctionnalité de catalogue d'attributs (190) adaptée à la modification liée à l'abonné, dans lequel un message déclencheur de recherche (221) est envoyé, par l'entité ou fonctionnalité d'orchestrateur d'accès (181), à l'entité ou fonctionnalité de catalogue d'attributs (190), dans lequel le message déclencheur de recherche (221) comprend des informations secrètes ou chiffrées, dans lequel, à la suite du message déclencheur de recherche (221), l'opération de mise à jour (230) implique un échange de données avec l'entité ou fonctionnalité de système de gestion d'éléments (182) et le système de support commercial et/ou opérationnel (105), dans lequel l'entité ou fonctionnalité d'orchestrateur d'accès (181) transmet un message de portail (231) comprenant les informations secrètes ou chiffrées à un portail lié à l'abonné (10), dans lequel et l'entité ou fonctionnalité de catalogue d'attributs (190) transmet un autre message de portail (232) comprenant les informations secrètes ou chiffrées au portail lié à l'abonné (10), dans lequel, après la mise en correspondance des informations secrètes ou chiffrées comprises par le message de portail (231) et les informations secrètes ou chiffrées comprises par l'autre message de portail (232), un enregistrement lié au client est automatiquement créé dans le portail lié à l'abonné (10), et la prochaine fois que le portail lié à l'abonné (10) est appelé par un client, des données mises à jour seront affichées.

9. Entité ou fonctionnalité de catalogue d'attributs (190) ou point de distribution de central téléphonique (110) comprenant une entité ou fonctionnalité de catalogue d'attributs (190) prévue pour être utilisée dans le cadre d'un réseau d'accès à large bande (120) ou d'un réseau de télécommunications (100) selon la revendication 8, l'entité ou fonctionnalité de catalogue d'attributs (190) réalisant une couche d'abonnement liée à l'accès ou un catalogue de portefeuille d'abonnés, comprenant des informations d'abonnement concernant la pluralité d'utilisateurs finaux ou d'abonnés, dans laquelle l'entité ou fonctionnalité de catalogue d'attributs (190) comprend des informations concernant les utilisateurs finaux ou les abonnés qui sont gérés par le point de distribution de central téléphonique respectif (110),
dans lequel l'entité ou fonctionnalité de catalogue d'attributs (190) est configurée de telle sorte que :
- l'entité ou fonctionnalité de catalogue d'attributs (190) est contactée par l'entité ou fonctionnalité d'orchestrateur d'accès (181), ce qui entraîne une opération de mise à jour (230) de l'entité ou fonctionnalité de catalogue d'attributs (190) adaptée à la modification liée à l'abonné.

10. Programme comprenant un code de programme lisible par ordinateur qui, lorsqu'il est exécuté sur des noeuds de réseau d'un réseau de télécommunications (100), amène les noeuds de réseau du réseau de télécommunications (100) à exécuter un procédé selon l'une des revendications 1 à 7.

11. Support lisible par ordinateur comprenant des instructions qui, lorsqu'elles sont exécutées sur des noeuds de réseau d'un réseau de télécommunications (100), amènent les noeuds de réseau du réseau de télécommunications (100) à exécuter un procédé selon l'une des revendications 1 à 7.
